# EUROPEAN PATENT APPLICATION

(11) **EP 4 769 064 A1**
(43) Date of publication of application: **01.07.2026**
(21) Application number: 25795561.7
(22) Date of filing: 04.11.2025
(51) Int. Cl.: G06F 1/16, G06F 1/18, H04M 1/02, F16C 11/04, H05K 1/14, H05K 1/02, G06F 115/12

(54) **FOLDABLE ELECTRONIC DEVICE COMPRISING FPCB**

(30) Priority: 04.11.2024 KR 20240154743; 18.12.2024 KR 20240190399; 24.01.2025 KR 20250010863
(71) Applicant: Samsung Electronics Co., Ltd., Suwon-si, Gyeonggi-do 16677 (KR)
(72) Inventor: LEE, Youngsun, Suwon-si, Gyeonggi-do 16677 (KR); CHO, Chihyun, Suwon-si, Gyeonggi-do 16677 (KR); JANG, Hyunsoo, Suwon-si, Gyeonggi-do 16677 (KR); SONG, Yongjae, Suwon-si, Gyeonggi-do 16677 (KR); KIM, Taesik, Suwon-si, Gyeonggi-do 16677 (KR)
(74) Representative: Gulde & Partner
(86) International application number: PCT/KR2025/017967
(87) International publication number: WO 2026/095751

(57) **Abstract**

According to an embodiment of the disclosure, there may be provided a foldable electronic device. A foldable electronic device may include a flexible printed circuit board (FPCB). The foldable electronic device may comprise a first housing including a first component, a second housing including a second component, a hinge assembly rotatably connecting the first housing and the second housing, a flexible display disposed from the first housing across a folding area where the hinge assembly is disposed to the second housing, and a flexible printed circuit board electrically connecting the first component and the second component, including a plurality of layers, and including a flexible portion corresponding to the folding area and rigid portions at one end and another end of the flexible portion. A signal line for transmitting a signal and/or power included in the plurality of layers of the flexible printed circuit board may include a metal material and include a first area, a second area, and a third area classified according to a degree of bending in a folding area of the flexible printed circuit board. At least one layer among the plurality of layers may be formed so that the metal material has different thicknesses in the first area, the second area, and the third area on a same layer. Other various embodiments may also apply.

## Description

### [Technical Field]

Various embodiments of the disclosure relate to an electronic device, e.g., an electronic device including an FPCB.

### [Background Art]

Advancing information communication and semiconductor technologies accelerate the spread and use of various electronic devices. Recent electronic devices are being developed to carry out communication while carried on.

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voices or images.

As electronic devices are highly integrated, and high-speed, high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function, such as for mobile banking, and a scheduling or e-wallet function. These electronic devices have been downsized to be conveniently carried by users.

The above-described information may be provided as related art for the purpose of helping understanding of the disclosure. No claim or determination is made as to whether any of the foregoing is applicable as background art in relation to the disclosure.

### [Disclosure of Invention]

### [Solution to Problems]

According to an embodiment of the disclosure, there is provided a foldable electronic device. A foldable electronic device includes a flexible printed circuit board (FPCB). The foldable electronic device comprises a first housing including a first component, a second housing including a second component, a hinge assembly rotatably connecting the first housing and the second housing, a flexible display disposed from the first housing across a folding area where the hinge assembly is disposed to the second housing, and a flexible printed circuit board (FPCB) electrically connecting the first component and the second component, including a plurality of layers, and including a flexible portion corresponding to the folding area and rigid portions at one end and another end of the flexible portion. A signal line for transmitting a signal and/or power included in the plurality of layers of the flexible printed circuit board includes a metal material and include a first area, a second area, and a third area classified according to a degree of bending in a folding area of the flexible printed circuit board. At least one layer among the plurality of layers is formed so that the metal material has different thicknesses in the first area, the second area, and the third area on a same layer.

A foldable electronic device may include a flexible printed circuit board (FPCB). The foldable electronic device may comprise a first housing including a first component, a second housing including a second component, a hinge assembly rotatably connecting the first housing and the second housing, a flexible display disposed from the first housing across a folding area where the hinge assembly is disposed to the second housing, and a flexible printed circuit board (FPCB) electrically connecting the first component and the second component, including a plurality of layers, and including a flexible portion corresponding to the folding area and rigid portions at one end and another end of the flexible portion. A signal line for transmitting a signal and/or power included in the plurality of layers of the flexible printed circuit board may include a metal material, and include a first area, a second area, and a third area classified according to a degree of bending in the folding area of the flexible printed circuit board. The first area may correspond to a flexible portion where the signal line is bent in the flexible printed circuit board, and the metal material of the first area may be formed to be the thinnest among the thickness of the metal material of the first area, the second area, and the third area. The third area may correspond to a rigid portion where the signal line is disposed flat in the flexible printed circuit board, and the metal material of the third area may be formed to be thickest among the thickness of the metal material of the first area, the second area, and the third area. The metal material of the second area may be formed thicker than a thickness of the metal material of the first area and thinner than a thickness of the metal material of the third area.

A foldable electronic device may include a flexible printed circuit board. The foldable electronic device may comprise a first housing including a first component, a second housing including a second component, a hinge assembly rotatably connecting the first housing and the second housing, a flexible display disposed from the first housing across a folding area where the hinge assembly is disposed to the second housing, and a flexible printed circuit board electrically connecting the first component and the second component, including a plurality of layers, and including a flexible portion corresponding to the folding area and rigid portions at one end and another end of the flexible portion. A signal line for a signal and/or power transmission included in the plurality of layers of the flexible printed circuit board may include a metal material, and include a first area, a second area, and a third area classified according to a degree of bending in the folding area of the flexible printed circuit board. The third area may be formed to have a thicker thickness compared to the first area and the second area in a layer formed at an outermost portion of the flexible printed circuit board among the plurality of layers. A layer disposed inside the two layers formed at the outermost portion of the flexible printed circuit board among the plurality of layers may be formed so that the metal material included in the signal line has different thicknesses in the first area and the second area.

According to an embodiment of the disclosure, there is provided a method of manufacturing a flexible printed circuit board (FPCB). A method of manufacturing a FPCB for electrically connecting a first component and a second component within a foldable electronic device comprises the steps of: providing a plurality of layers for the FPCB, wherein at least one layer of the plurality of layers includes a signal line for transmitting a signal and/or power including a metal material; processing the FPCB to define, within a folding area corresponding to a folding area of the foldable electronic device, a first area, a second area, and a third area classified according to a degree of bending; and processing the metal material of within the at least one layer to have different thicknesses in the first area, the second area, and the third area on a same layer.

### [Brief Description of Drawings]

The foregoing and other aspects, configurations, and/or advantages of an embodiment of the disclosure will be more apparent from the following detailed description taken in conjunction with the accompanying drawings.
FIG. 1 is a block diagram illustrating an electronic device in a network environment according to an embodiment of the disclosure;
FIG. 2 is a front view, side view, and rear view illustrating an electronic device in an unfolded state according to an embodiment of the disclosure;
FIG. 3 is a front view, side view, and rear view illustrating an electronic device in a folded state according to an embodiment of the disclosure;
FIG. 4 is an exploded perspective view illustrating an electronic device in an unfolded state according to an embodiment of the disclosure;
FIG. 5 is a cross-sectional view illustrating a partial configuration of an electronic device according to an embodiment of the disclosure;
FIG. 6 is an enlarged cross-sectional view illustrating a partial configuration of an electronic device according to an embodiment of the disclosure;
FIG. 7 is a perspective view illustrating a flexible printed circuit board according to an embodiment of the disclosure;
FIG. 8 is a cross-sectional view illustrating a partial configuration of an electronic device according to an embodiment of the disclosure;
FIG. 9 is a front view illustrating a flexible printed circuit board according to an embodiment of the disclosure;
FIG. 10 is a cross-sectional view illustrating a flexible printed circuit board according to an embodiment;
FIG. 11 is a cross-sectional view illustrating a flexible printed circuit board according to an embodiment;
FIG. 12 is a cross-sectional view illustrating a flexible printed circuit board according to an embodiment;
FIG. 13 is a cross-sectional view illustrating a flexible printed circuit board according to an embodiment of the disclosure;
FIG. 14 illustrates an X-ray capture of a flexible printed circuit board according to an embodiment of the disclosure;
FIG. 15 is a cross-sectional view illustrating a flexible printed circuit board according to an embodiment;
FIG. 16 is a cross-sectional view illustrating a flexible printed circuit board according to an embodiment of the disclosure;
FIG. 17 is a view illustrating a manufacturing method according to an embodiment of the disclosure;
FIG. 18 is a view illustrating a manufacturing method according to an embodiment of the disclosure;
FIG. 19 is a view illustrating a manufacturing method according to an embodiment of the disclosure; and
FIG. 20 is a view illustrating a manufacturing method according to an embodiment of the disclosure.

Throughout the drawings, like reference numerals may be assigned to like parts, components, and/or structures.

### [Mode for the Invention]

A foldable electronic device includes a plurality of electronic components, and the plurality of electronic components may be disposed to be spaced apart from each other within a foldable housing of the foldable electronic device. A flexible printed circuit board (FPCB) including signal lines may be used for transmission of signals and/or power between the plurality of electronic components disposed to be spaced apart. For example, the flexible printed circuit board may be disposed to cross a hinge assembly (or hinge module, hinge structure) of the foldable electronic device, and in this case, repetitive bending operations may be performed in a portion of the flexible printed circuit board corresponding to the hinge assembly.

The flexible printed circuit board is required to have high durability to have a long service life even under repetitive bending. Signal lines included in the flexible printed circuit board are mainly composed of a metal layer such as copper, and the metal layer may have higher durability when the metal layer is thin and an insulation layer surrounding the metal layer is thick. The use of a metal material for the signal line may provide the necessary conductivity for power and high-speed signals required by the electronic device. However, when the metal layer is thin, resistance is high, making it difficult to provide signal lines with stable and high transmission efficiency.

For example, in a case where power is supplied from a battery to other electronic components inside the foldable electronic device, the thickness of the metal layer may need to be secured above a predetermined thickness in order for power to be stably supplied and have high transmission efficiency. However, forming the metal layer with a thick thickness goes against the downsizing trend of foldable electronic devices, and since it has a trade-off relationship with the durability of the flexible printed circuit board, caution is required in the design of the flexible printed circuit board.

The disclosure Is to provide a flexible printed circuit board having high durability while being able to stably and efficiently transmit signals and/or power, and an electronic device (e.g., a foldable electronic device) including the same.

An embodiment of the disclosure is intended to at least address the foregoing issues and/or disadvantages and to at least provide the advantages described below, and may provide a downsized connector and/or an electronic device (e.g., a foldable electronic device) including the same that facilitates downsizing and/or enables waterproofing for daily use while being downsized.

Objects of the disclosure are not limited to the foregoing, and other unmentioned objects would be apparent to one of ordinary skill in the art from the following description.

The following description taken in conjunction with the accompanying drawings may provide an understanding of various exemplary implementations of the disclosure, including claims and their equivalents. The specific embodiments disclosed in the following description entail various specific details to aid understanding, but are regarded as one of various embodiments. Accordingly, it will be understood by those skilled in the art that various changes and modifications may be made to the various implementations described in the disclosure without departing from the scope and spirit of the disclosure. Further, descriptions of well-known functions and configurations may be omitted for clarity and brevity.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims and equivalent thereto.

The singular forms "a," "an," and "the" are intended to include the plural forms as well, unless the context clearly indicates otherwise. Thus, as an example, "a component surface" may be interpreted as including one or more of the surfaces of a component.

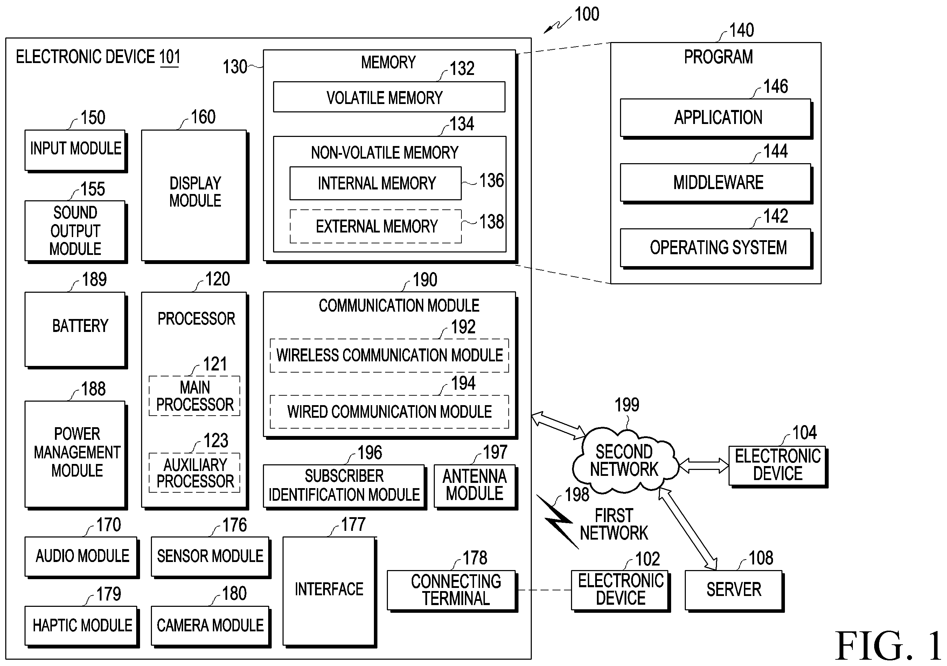

FIG. 1 is a block diagram illustrating an electronic device 101 in a network environment 100 according to an embodiment of the disclosure.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the sub processor 123, the sub processor 123 may be configured to use lower power than the main processor 121 or to be specified for a designated function. The sub processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multipleoutput (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or clientserver computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of devices. The electronic devices may include, for example, a portable communication device (e.g., a smartphone), a computer device, a portable multimedia device, a portable medical device, a camera, a wearable device, or a home appliance. The electronic devices according to an embodiment are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1^{st}" and "2^{nd}," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

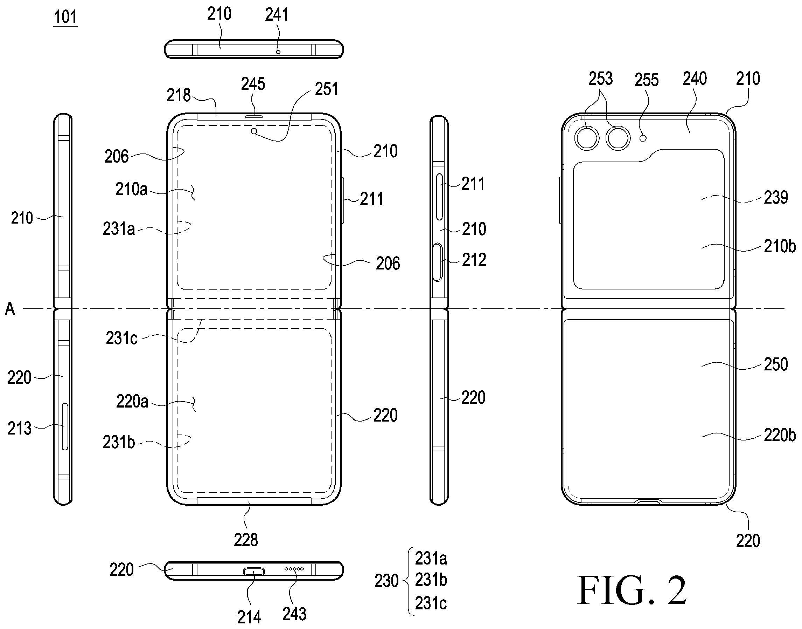

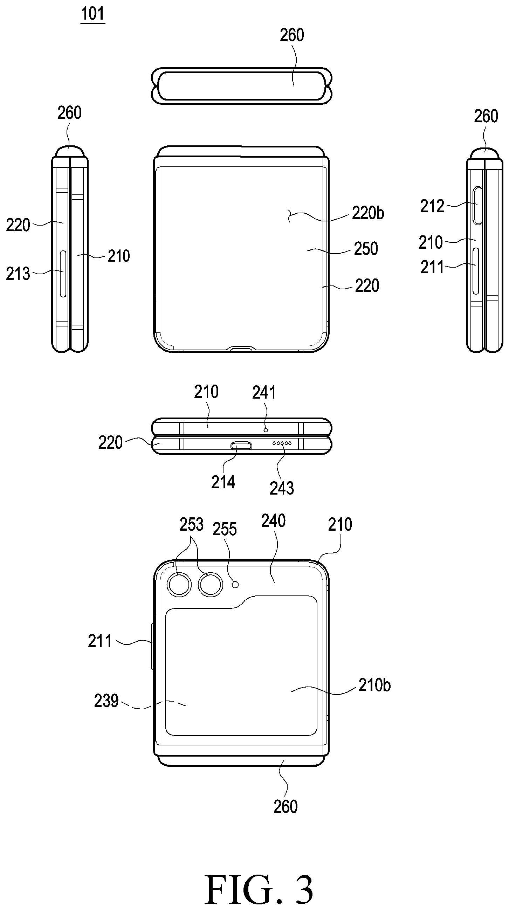

FIG. 2 is a front view, side view, and rear view illustrating an electronic device 101 in an unfolded state according to an embodiment of the disclosure. FIG. 3 is a front view, side view, and rear view illustrating an electronic device 101 in a folded state according to an embodiment of the disclosure.

Referring to FIGS. 2 and 3, an electronic device 101 according to an embodiment may include a first housing 210, a second housing 220, a flexible display 230 disposed on the first housing 210 and the second housing 220, and a hinge cover 260.

The flexible display 230 may be referred to as a "foldable display" or may be simply referred to as a "display." Hereinafter, in FIGS. 2 and 3, it may be referred to as a first display 230 for distinction from another display (e.g., a second display 239). According to an embodiment, the surface on which the first display 230 is disposed may be defined as a front surface of the electronic device 101. At least a portion of the front surface of the electronic device 101 may be formed of a substantially transparent front plate (e.g., a glass plate or polymer plate including various coating layers). The opposite surface of the front surface may be defined as a rear surface of the electronic device 101. The rear surface of the electronic device 101 may be formed by a substantially opaque rear plate (hereinafter, referred to as a 'back cover'). The back cover may be formed of, e.g., laminated or colored glass, ceramic, polymer, metal (e.g., aluminum, stainless steel (STS), or magnesium), or a combination of at least two thereof. The surface surrounding the space between the front and rear surfaces may be defined as a side surface of the electronic device 101. The side surface may be formed by a side bezel structure (or a "side member") that couples to the front plate and the rear plate and includes a metal and/or polymer. According to an embodiment, the back cover and the side bezel plate may be integrally formed together and include the same material (e.g., a metal, such as aluminum).

According to an embodiment, the electronic device 101 may include at least one or more of a first display 230, audio modules 241, 243, and 245, a sensor module 255, camera devices 251 and 253, key input devices 211, 212, and 213, and a connector hole 214. According to an embodiment, the electronic device 101 may omit at least one (e.g., the key input devices 211, 212, and 213) of the components or additionally include another component (e.g., a light emitting device).

According to an embodiment, the first display 230 may be a display at least a portion of which may be transformed into a flat or curved surface. According to an embodiment, the first display 230 may include a folding area 231c, a first area 231a disposed on one side of the folding area 231c (e.g., an upper side of the folding area 231c of FIG. 2), and a second area 231b disposed on the opposite side of the folding area 231c (e.g., a lower side of the folding area 231c of FIG. 2). However, the segmentation of the first display 230 as shown in FIG. 2 is merely an example, and the first display 230 may be divided into a plurality of (e.g., four or more, or two) areas depending on the structure or function. For example, in the embodiment illustrated in FIG. 2, the first display 230 may be divided into the areas by the folding area 231c or folding axis A but, in an embodiment, the first display 230 may be divided into the areas with respect to another folding area 231c or another folding axis (e.g., a folding axis perpendicular to the folding axis A).

According to an embodiment, the microphone hole 241 may have a microphone inside to obtain external sounds. In an embodiment, there may be a plurality of microphones to be able to detect the direction of a sound.

According to an embodiment, the speaker holes 243 and 245 may include an external speaker hole 243 and a phone receiver hole 245. According to an embodiment, the speaker holes 243 and 245 and the microphone hole 241 may be implemented as a single hole, or speakers may be rested without the speaker holes 243 and 245 (e.g., piezo speakers). Various changes may be made to the position and number of microphone holes 241 and speaker holes 243 and 245 according to an embodiment.

According to an embodiment, the electronic device 101 may include a first camera device 251 disposed on the first surface 210a of the first housing 210 of the electronic device 101 and a second camera device 253 disposed on the second surface 210b. The electronic device 101 may further include a flash (not shown). The camera devices 251 and 253 may include one or more lenses, an image sensor, and/or an image signal processor. The flash (not shown) may include, e.g., a light emitting diode or a xenon lamp.

According to an embodiment, the sensor module 255 may generate an electrical signal or a data value corresponding to an internal operating state of the electronic device 101 or an external environmental state. Although not shown in the drawings, the electronic device 101 may additionally or alternatively include a sensor module (e.g., the sensor module 176 of FIG. 1) other than the sensor module 255 provided on the second surface 210b of the first housing 210. The electronic device 101 may include, as the sensor module, at least one of a proximity sensor, a fingerprint sensor, an HRM sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

According to an embodiment, the key input devices 211, 212, and 213 may be disposed on a side surface of the foldable housing (e.g., the hinge cover 260, the first housing 210 and/or the second housing 220). According to an embodiment, the electronic device 101 may exclude all or some of the above-mentioned key input devices 211, 212, and 213 and the excluded key input devices may be implemented in other forms, e.g., as soft keys, on the first display 230. In an embodiment, the key input device may be configured to implement key input by a sensor module (e.g., a gesture sensor).

According to an embodiment, the connector hole 214 may be configured to receive a connector (e.g., a USB connector) for transmitting/receiving power and/or data to/from an external electronic device or, additionally or alternatively, a connector for transmitting/receiving audio signals to/from an external electronic device.

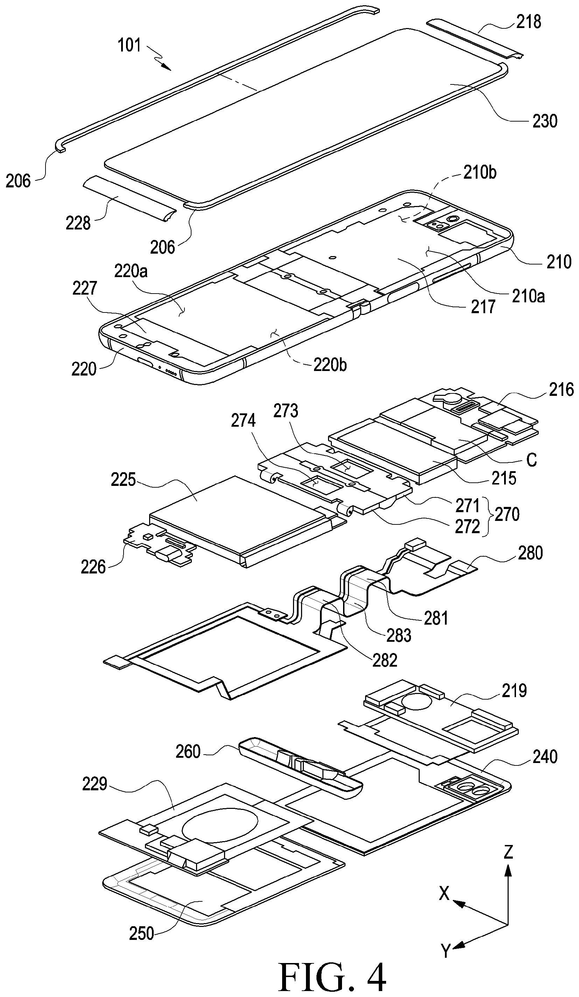

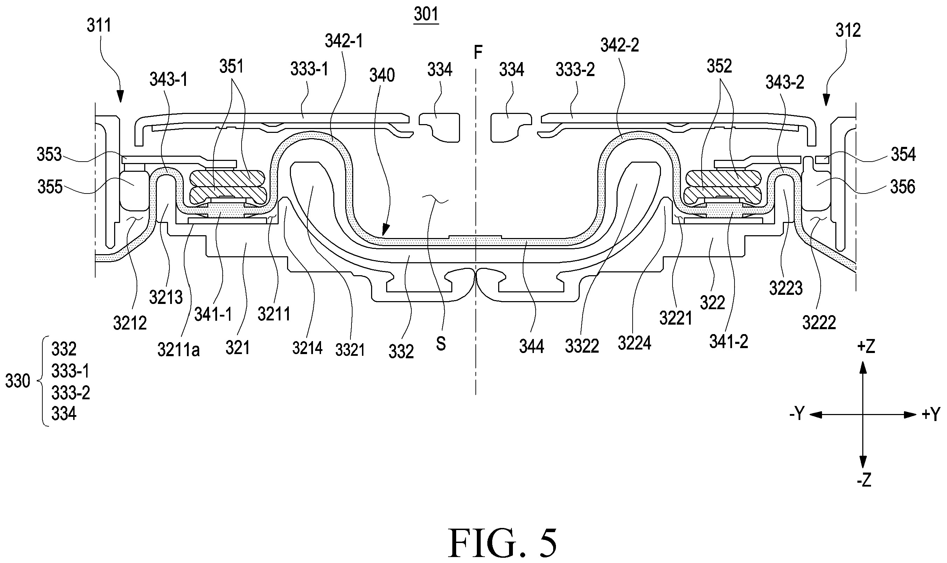

According to an embodiment, a foldable housing may be implemented by a combination of the first housing 210, the second housing 220, the first back cover 240, the second back cover 250, and/or the hinge module (e.g., the hinge structure 270 of FIG. 4, the hinge assembly 330 of FIG. 5 described below). The foldable housing of the electronic device 101 is not limited to the shape and coupling shown but may rather be implemented in other shapes or via a combination and/or coupling of other components. For example, in an embodiment, the first housing 210 and the first back cover 240 may be integrally formed with each other, and the second housing 220 and the second back cover 250 may be integrally formed with each other. According to an embodiment of the disclosure, 'housing' may mean a combination of other various components not mentioned and/or a combined configuration thereof. For example, it may be described that a first area 231a of the first display 230 forms one surface of the first housing 210 and, in an embodiment, the first area 231a of the first display 230 is disposed or attached to one surface of the first housing 210.

According to an embodiment, the first housing 210 may be connected to the hinge module (e.g., the hinge structure 270 of FIG. 4, the hinge assembly 330 of FIG. 5 described below) and may include a first surface 210a facing in a first direction and a second surface 210b facing in a second direction opposite to the first direction. The second housing 220 may be connected to the hinge module (e.g., the hinge structure 270 of FIG. 4, the hinge assembly 330 of FIG. 5 described below) and may include a third surface 220a facing in a third direction and a fourth surface 220b facing in a fourth direction opposite to the third direction and may be rotated or pivoted from the first housing 210 about the hinge module (or folding axis A).

According to an embodiment, the first housing 210 and the second housing 220 may be disposed on two opposite sides (or upper/lower sides) of the folding axis A. The angle or distance between the first housing 210 and the second housing 220 may be varied depending on whether the electronic device 101 is in the unfolded state, the folded state, or the partially unfolded (or partially folded) intermediate state. According to an embodiment, when the electronic device 101 is in an unfolded state, it may be referred to as a first state, when the electronic device 101 is in a folded state, it may be referred to as a second state, and an intermediate state of the electronic device 101 may be referred to as a third state.

According to an embodiment, the first housing 210 and the second housing 220 may at least partially be formed of a metal or non-metallic material with a rigidity selected to support the first display 230. The at least a portion formed of the metal material may be provided as a ground plane or radiating conductor of the electronic device 101 and, if provided as the ground plane, it may be electrically connected with a ground line formed on the printed circuit board (e.g., the printed circuit board 216 or 226 of FIG. 4).

According to an embodiment, the first back cover 240 may be disposed on one side (e.g., the upper side in FIG. 2) of the folding axis A, on the rear surface of the electronic device 101, e.g., it may have a substantially rectangular periphery which may be surrounded by the first housing 210 (and/or the side bezel structure). Similarly, the second back cover 250 may be disposed on the opposite side (e.g., the lower side in FIG. 2) of the folding axis A on the rear surface of the electronic device 101 and its periphery may be surrounded by the second housing 220 (and/or the side bezel structure).

According to an embodiment, the first back cover 240 and the second back cover 250 may be substantially symmetrical in shape with respect to the folding axis A. However, the first back cover 240 and the second back cover 250 are not necessarily symmetrical in shape. In an embodiment, the electronic device 101 may include the first back cover 240 and the second back cover 250 in various shapes. In an embodiment, the first back cover 240 may be integrally formed with the first housing 210, and the second back cover 250 may be integrally formed with the second housing 220.

According to an embodiment, the first back cover 240, the second back cover 250, the first housing 210, and the second housing 220 may form a space where various components (e.g., the printed circuit boards 216 and 226 or batteries 215 and 225 of FIG. 4) of the electronic device 101 may be disposed. According to an embodiment, one or more components may be arranged or visually exposed on/through the rear surface of the electronic device 101. For example, at least a portion of a second display 239 may be visually exposed through the first back cover 240. In an embodiment, one or more components or sensors may be visually exposed through the first back cover 240. According to various embodiments, the components or sensors may include a proximity sensor, a rear camera, and/or a flash. Although not separately shown in the drawings, one or more other components or sensors may be visually exposed through the second back cover 250.

According to an embodiment, the front camera device 251 exposed from the front surface of the electronic device 101 through one or more openings or the rear camera device 253 exposed through the first back cover 240 may include one or more lenses, an image sensor, and/or an image signal processor. The flash (not shown) may include, e.g., a light emitting diode or a xenon lamp. In an embodiment, two or more lenses (infrared camera, wideangle and telephoto lens) and image sensors may be disposed on one surface of the electronic device 101.

According to an embodiment, the foldable housing 210, 220, and 260 may include a hinge cover 260, a first housing 210, and a second housing 220. The first housing 210 and the second housing 220 may be rotated with respect to a hinge module (e.g., the hinge structure 270 of FIG. 4, the hinge assembly 330 of FIG. 5). When the electronic device 101 changes from an unfolded state to a folded state, the first housing 210 and the second housing 220 may rotate with respect to the hinge module so as to approach each other. When the electronic device 101 changes from a folded state to an unfolded state, a portion of the first housing 210 and a portion of the second housing 220 may rotate with respect to the hinge cover 260 so as to move away from each other. According to an embodiment of the disclosure, a folding direction in which the first housing 210 and/or the second housing 220 fold may include a direction in which the first housing 210 and/or the second housing 220 rotate with respect to a hinge module (e.g., the hinge structure 270 of FIG. 4, the hinge assembly 330 of FIG. 5) when the first housing 210 and/or the second housing 220 is converted from an unfolded state to a folded state. An unfolding direction in which the first housing 210 and/or the second housing 220 unfold may include a direction in which the first housing 210 and/or the second housing 220 rotate with respect to a hinge module (e.g., the hinge structure 270 of FIG. 4, the hinge assembly 330 of FIG. 5) when the first housing 210 and/or the second housing 220 is converted from a folded state to an unfolded state.

According to an embodiment, the electronic device 101 may be variable so that the first display 230 is in a folded state or the first display 230 is in an unfolded state. For example, the first housing 210 and the second housing 220 may rotate about a folding axis A between a folded state in which a first area 231a and a second area 231b of the first display 230 face each other, and an unfolded state unfolded by a designated angle from the folded state (e.g., the electronic device 101 illustrated in FIG. 2 is in an unfolded state).

According to an embodiment, as the first housing 210 and the second housing 220 rotate about the folding axis A, the electronic device 101 may include a folded state and an unfolded state. The folded state may be a state in which the first housing 210 and the second housing 220 face each other, and may be a state in which an angle formed by the first housing 210 and the second housing 220 is less than a predetermined angle (e.g., about 10 degrees). The unfolded state may be a state in which the electronic device 101 is fully or partially unfolded, and may be a state in which an angle formed by the first housing 210 and the second housing 220 is equal to or larger than the predetermined angle.

FIG. 2 illustrates an unfolded state of the electronic device 101 in which the first housing 210 and the second housing 220 form an angle of about 180°. FIG. 3 illustrates a folded state of the electronic device 101 in which the first housing 210 and the second housing 220 face each other and are parallel. In the folded state, the first area 231a and the second area 231b of the first display 230 may be positioned to face each other, and the folding area 231c may be bent.

According to an embodiment, the folding of the electronic device 101 may be implemented in two types: "in-folding" in which the first area 231a and the second area 231b are folded to face each other; and "out-folding" in which the first area 231a and the second area 231b are folded to face in opposite directions. For example, in the in-folding state, the first area 231a and the second area 231b may be substantially concealed, and in the fully unfolded state, the first area 231a and the second area 231b may be disposed to face in substantially the same direction. For example, in the out-folding state, the first area 231a and the second area 231b may be disposed to face in opposite directions to be visually exposed to the outside, and in the fully unfolded state, the first area 231a and the second area 231b may be disposed to face in substantially the same direction.

According to an embodiment, the first display 230 may include a display panel (not shown) and a window member (not shown), and at least a portion of the first display 230 may be formed to be flexible. Although not illustrated separately, it will be easily understood by one of ordinary skill in the art that the first display 230 or the display panel includes various layers such as a light emitting layer, substrate(s) encapsulating the light emitting layer, an electrode or a conductive line layer, and/or adhesive layer(s) bonding different adjacent layers. When the first display 230 (e.g., the folding area 231c) is deformed into a flat plate shape and a curved shape, relative displacement may occur between layers constituting the first display 230. The relative displacement according to the deformation of the first display 230 may increase as it is farther from the folding axis A and/or as the thickness of the first display 230 increases.

According to an embodiment, the window member, e.g., the thin film plate, may serve as a protective film to protect the display panel. As a protective film, the thin film plate may be formed of a material that protects the display panel from external impact, is resistant to scratches, and causes less creases in the folding area 231c even in repetitive folding and unfolding operations of the housings 210 and 220. For example, the material of the thin film plate may include a clear polyimide (CPI) film or ultra-thin glass (UTG).

According to an embodiment, the electronic device 101 may further include protective member(s) 206 or decorative covers(s) 218 and 228 disposed on at least a portion of the edge of the first display 230 on the front surface (e.g., the first surface 210a or the third surface 220a). As an example, the protective member 206 and the decorative covers 218 and 228 may be connected to each other to surround the edge of the first display 230. The protective member 206 or the decorative covers 218 and 228 may prevent at least a portion of an edge of the first display 230 from contacting a mechanical structure (e.g., the first housing 210 or the second housing 220). The protective member 206 or the decorative covers 218 and 228 may be visually exposed to the outside of the electronic device 101.

According to an embodiment, the decorative covers 218 and 228 and the protective member 206 may be connected to each other. As an example, the decorative covers 218 and 228 and the protective member 206 may be integrally formed. The decorative covers 218 and 228 may extend along the folding axis A. The decorative covers 218 and 228 may include a first decorative cover 218 disposed between a portion of an edge of the first area 231a of the first display 230 and an inner wall of the first housing 210. The decorative covers 218 and 228 may include a second decorative cover 228 disposed between a portion of an edge of the second area 231b of the first display 230 and an inner wall of the second housing 220. As an example, the first decorative cover 218 and the second decorative cover 228 may extend substantially side by side along the folding axis A.

According to an embodiment, the speaker hole 245 may be formed in the decorative cover 218 or the protective member 206 interposed between the edge of the first area 231a of the first display 230 and the inner wall of the first housing 210. As an example, the speaker hole 245 may be formed in the first decorative cover 218.

FIG. 4 is an exploded perspective view illustrating an electronic device 101 according to an embodiment.

Referring to FIG. 4, according to an embodiment of the disclosure, the first display 230 may be visually exposed through a significant portion of the front surface of the electronic device 101. In an embodiment, the shape of the first display 230 may be formed to be substantially the same as the shape of the periphery of the front surface of the electronic device 101.

In FIG. 4, 'Y' may mean a length direction of the electronic device 101 in the unfolded state (first state) of the electronic device 101.

The foldable housing of the electronic device 101 may include the first housing 210 and the second housing 220. According to an embodiment, the first housing 210 may include a first surface 210a and a second surface 210b facing in a direction opposite to the first surface 210a. The second housing 220 may include a third surface 220a and a fourth surface 220b facing in a direction opposite to the third surface 220a. The electronic device 101 or the foldable housing 210, 220, 260 may additionally or alternatively include a bracket assembly 217, 227. The bracket assembly 217, 227 may include a first bracket assembly 217 disposed in the first housing 210 and a second bracket assembly 227 disposed in the second housing 220. At least a portion of the bracket assembly 217, 227, e.g., at least a portion of the first bracket assembly 217 and at least a portion of the second bracket assembly 227, may serve as a plate for supporting the hinge structure 270.

The electronic device 101 may include a flexible display 230 disposed to extend from the first housing 210 to the second housing 220 across an area where a hinge structure 270 (e.g., the hinge module of FIGS. 2 to 3, the hinge assembly 330 of FIG. 5 described below) is disposed.

According to an embodiment, various electric components may be disposed on the printed circuit board 216, 226. For example, a processor (e.g., the processor 120 of FIG. 1), memory (e.g., the memory 130 of FIG. 1), and/or an interface (e.g., the interface 177 of FIG. 1) may be mounted on the printed circuit board 216, 226. The processor may include one or more of, e.g., a central processing unit, an application processor, a graphic processing device, an image signal processing, a sensor hub processor, or a communication processor. The memory may include, e.g., a volatile or non-volatile memory. The interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

According to an embodiment, the printed circuit boards 216, 226 may include a first printed circuit board 216 disposed on the side of the first bracket assembly 217 and a second printed circuit board 226 disposed on the side of the second bracket assembly 227. The first printed circuit board 216 and the second printed circuit board 226 may be disposed inside the space formed by the foldable housing 210, 220, 260, the bracket assembly 217, 227, the first back cover 240 and/or the second back cover 250. Components for implementing various functions of the electronic device 101 may be disposed on the first printed circuit board 216 and the second printed circuit board 226. For example, a processor may be disposed on the first printed circuit board 216, and an audio interface may be disposed on the second printed circuit board 226.

According to an embodiment, batteries 215, 225 may be disposed adjacent to the printed circuit board 216, 226 to supply power to the electronic device 101. At least a portion of the batteries 215, 225 may be disposed on substantially the same plane as the printed circuit board 216 or 226. According to an embodiment, a first battery 215 may be disposed adjacent to the first printed circuit board 216, and a second battery 225 may be disposed adjacent to the second printed circuit board 226. The batteries 215, 225 may be a device for supplying power to at least one component of the electronic device 101. The battery 189 may include, e.g., a primary cell which is not rechargeable, a secondary cell which is rechargeable, or a fuel cell. The batteries 215, 225 may be integrally or detachably disposed inside the foldable housing 210, 220, 260.

According to an embodiment, the hinge structure 270 may be a component to provide a folding axis (e.g., the folding axis A of FIG. 2) and rotatably connect or couple the foldable housing 210, 220, 260 and/or the bracket assembly 217, 227. The hinge structure 270 may include a first hinge structure 271 disposed on the side of the first printed circuit board 216 and a second hinge structure 272 disposed on the side of the second printed circuit board 226. The hinge structure 270 may be disposed between the first printed circuit board 216 and the second printed circuit board 226. According to an embodiment, the hinge structure 270 may be formed substantially integrally with at least a portion of the first bracket assembly 217 and at least a portion of the second bracket assembly 227.

According to an embodiment, a 'housing structure' may include the foldable housing210, 220, 260 and may denote one resultant from assembling and/or combining at least one component disposed in the foldable housing 210, 220, 260. The housing structure may include a first housing structure and a second housing structure. For example, a component assembled to include at least one component among the first housing 210 and the first bracket assembly 217, the first printed circuit board 216, and the first battery 215 disposed inside the first housing 210 may be referred to as the 'first housing structure.' As another example, a component assembled to include at least one component among the second housing 220 and the second bracket assembly 227, the second printed circuit board 226, and the second battery 225 disposed inside the second housing 220 may be referred to as the 'second housing structure.' However, it should be noted that the 'first housing structure and the second housing structure' are not limited to the addition of the above-described components, but may add or omit various other components.

According to an embodiment, the flexible connection member 280 may be, e.g., a flexible printed circuit board (FPCB). The flexible connecting member 280 may connect various electrical elements disposed on the first printed circuit board 216 and the second printed circuit board 226. To this end, the flexible connecting member 280 may be disposed to cross the 'first housing structure' and the 'second housing structure'. According to an embodiment, the flexible connecting member 280 may be disposed to cross at least a portion of the hinge structure 270. According to an embodiment, the flexible connection member 280 may be configured to connect the first printed circuit board 216 and the second printed circuit board 226 across the hinge structure 270 along a direction parallel to, e.g., the y axis of FIG. 4. As another example, the flexible connecting member 280 may extend or be disposed through the openings 273, 274 formed in the hinge structure 270. In this case, a portion 281 of the flexible connecting member 280 may be disposed over one side (e.g., upper portion) of the first hinge structure 271, and another portion 282 of the flexible connecting member 280 may be disposed over one side (e.g., upper portion) of the second hinge structure 272. Another portion 283 of the flexible connection member 280 may be disposed on the other side (e.g., lower portion) of the first hinge structure 271 and the second hinge structure 272. A space (hereinafter, referred to as a conductive line space (wiring space) (hereinafter, the inner space S of FIG. 5)') surrounded by at least a portion of the first hinge structure 271, at least a portion of the second hinge structure 272, and at least a portion of the hinge cover 260 may be formed in a position adjacent to the first hinge structure 271 and the second hinge structure 272. According to an embodiment, at least a portion (e.g., 283) of the flexible connecting member 280 may be disposed in the conductive line space.

According to an embodiment, the hinge cover 260 may be a component that covers at least a portion of the hinge structure 270 or the conductive line space. In an embodiment, the hinge cover 260, together with the hinge structure 270, may form the conductive line space and protect components (e.g., at least a portion 283 of the flexible connection member 280) disposed in the conductive line space from external impact. According to an embodiment, the hinge cover 260 may be disposed between the first housing 210 and the second housing 220. In the electronic device 101 which is of an in-folding type, the hinge cover 260 may be at least partially concealed by the foldable housing 210, 220, 260. For example, in the folded state, the hinge cover 260 may be visually exposed to the external space between the rear surface (e.g., the first back cover 240) of the first housing 210 and the back cover (e.g., the second back cover 250) of the second housing 220 and, in the unfolded state, the hinge cover 260 may be substantially received inside the first housing 210 or the second housing 220 to be visually concealed.

According to an embodiment, the antenna module 219, 229 (e.g., the antenna module 197 of FIG. 1) may be disposed between the back cover 240, 250 and the batteries 215, 225. According to an embodiment, the antenna module 219, 229 may include a first antenna module 219 disposed on the side of the first housing 210 and a second antenna module 229 disposed on the side of the second housing 220. The antenna module 219, 229 may include, e.g., a near field communication (NFC) antenna, a wireless charging antenna, and/or a magnetic secure transmission (MST) antenna, performing short-range communication with an external device or wirelessly transmitting/receiving power required for charging. In an embodiment, an antenna structure may be formed by a portion or combination of the side bezel structure of the foldable housing 210, 220, 260 and/or bracket assembly.

According to an embodiment, the back cover 240, 250 may include a first back cover 240 and a second back cover 250. The back cover 240, 250 may be combined with the foldable housing 210, 220, 260 to protect the above-described components (e.g., the printed circuit board 216, 226, the batteries 215, 225, the flexible connection member 280, or the antenna module 219, 229) disposed in the foldable housing 210, 220, 260. As described above, the back cover 240, 250 may be formed substantially integrally with the foldable housing 210, 220, 260.

According to an embodiment, the protective member 206 and/or the decorative covers 218 and 228 may protect at least a portion of the edge of the first display 230. The protective member 206 may be disposed between the edge of the first area 231a (see FIG. 2) of the first display 230 and the inner wall of the first housing 210 and/or between the edge of the second area 231b (see FIG. 2) of the first display 230 and the inner wall of the second housing 220 to prevent the edge of the first display 230 from directly contacting the inner walls of the housings 210 and 220.

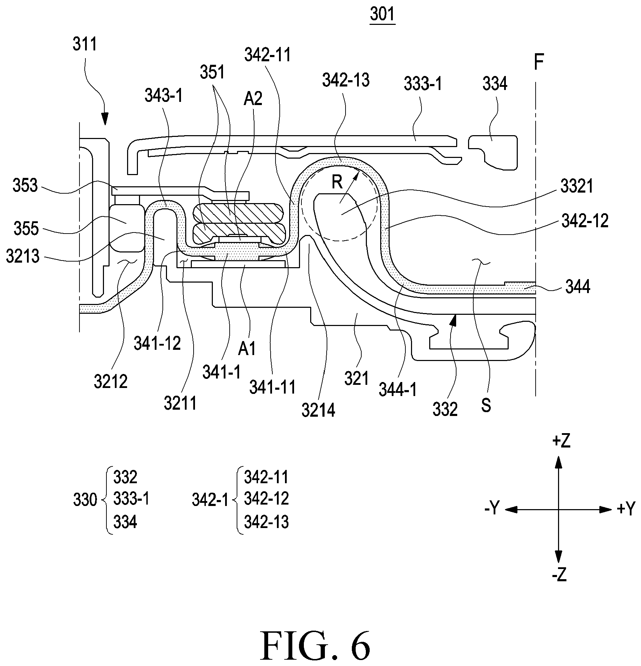

FIG. 5 is a cross-sectional view illustrating a partial configuration of an electronic device according to an embodiment of the disclosure. FIG. 6 is an enlarged cross-sectional view illustrating a partial configuration of an electronic device according to an embodiment of the disclosure.

Specifically, FIG. 5 is a cross-sectional view illustrating a hinge portion of a foldable electronic device 301. FIG. 6 is a cross-sectional view illustrating an enlarged structure near a first fixing portion 341-1 of the flexible printed circuit board 340 of FIG. 5.

The detailed configuration of the foldable electronic device 301 according to an embodiment of the disclosure not described below may be the same as the detailed configuration of the electronic device 101 according to an embodiment of the disclosure described with reference to FIGS. 1 to 4.

Hereinafter, the foldable electronic device 301 (e.g., the electronic device 101 of FIGS. 1 to 4) may include a first housing 311, a second housing 312, a flexible display (e.g., the display module 160 of FIG. 1, the display 230 of FIGS. 2 to 4), a first supporting member 321, a second supporting member 322, a hinge assembly 330 (e.g., the hinge structure 270 and the hinge cover 260 of FIG. 4), a flexible printed circuit board 340, a first holder 351, a second holder 352, a first front plate 353, a second front plate 354, a first sealing member 355, and a second sealing member 356. However, according to the embodiment, some of these may be omitted from the foldable electronic device 301, or other additional components may be further included.

Hereinafter, "an unfolded state of the foldable electronic device 301" may refer to an unfolded state of the foldable electronic device 301 (e.g., the unfolded state of FIG. 2), and "a folded state of the foldable electronic device 301" may refer to a state in which the foldable electronic device 301 is folded (e.g., the folded state of FIG. 3).

Hereinafter, a "first direction (+Y direction)" may refer to a direction toward a folding plane F with respect to the first housing 311 or a direction toward an opposite side of the folding plane F with respect to the second housing 312 (e.g., a right direction with respect to FIG. 5) when the foldable electronic device 301 is in an unfolded state (first state). Here, the folding plane F is a plane perpendicular to the folding axis A of FIG. 2, and the first housing 311 and the second housing 312 may behave symmetrically with respect to the folding plane F. According to an embodiment, a hinge assembly 330 included in the foldable electronic device 301 may be symmetric in shape with respect to the folding plane F. According to another embodiment, in addition to the hinge assembly 330, various components included in the foldable electronic device 301 may be disposed symmetrically with respect to the folding plane F. A "second direction (-Y direction)" is a direction opposite to the first direction (+Y direction), and may refer to a direction toward an opposite side of the folding plane F with respect to the first housing 311 or a direction toward the folding plane F with respect to the second housing 312 (e.g., a left direction with respect to FIG. 5) when the foldable electronic device 301 is in an unfolded state. Further, a first thickness direction (+Z direction) may refer to a direction in which the foldable electronic device 301 is folded with respect to a thickness direction of the foldable electronic device 301, the first supporting member 321, and/or the second supporting member 322 (e.g., an upper direction in FIG. 5). Further, a second thickness direction (-Z direction) is a direction opposite to the first thickness direction (+Z direction), and may refer to a direction opposite to a direction in which the foldable electronic device 301 is folded with respect to a thickness direction of the foldable electronic device 301, the first supporting member 321, and/or the second supporting member 322 (e.g., a lower direction in FIG. 5).

Hereinafter, specific structures not described in relation to the second housing 312 area may be understood as being symmetric structures of the specific structures described in relation to the first housing 311 area with respect to the folding plane F.

According to an embodiment, the foldable electronic device 301 may include a first housing 311 (e.g., the first housing 210 of FIGS. 2 to 4). For example, inside the first housing 311, a first supporting member 321, a portion of the flexible printed circuit board 340, a first holder 351, a first front plate 353, and/or a first sealing member 355 may be disposed. The first housing 311 may be referred to as a 'housing.'

According to an embodiment, the foldable electronic device 301 may include a hinge assembly 330. The hinge assembly 330 may be connected to the first housing 311 and the second housing 312. The hinge assembly 330 may be disposed between the first housing 311 and the second housing 312. The hinge assembly 330 may rotatably couple the first housing 311 and the second housing 312 about the folding plane F.

According to an embodiment, the hinge assembly 330 (e.g., the hinge structure 270 and the hinge cover 260 of FIG. 4) may include an inner space S. The inner space S may be defined by a hinge cover 332 (e.g., the hinge cover 260 of FIG. 4), a first hinge plate 333-1, and a second hinge plate 333-2. The inner space S may refer to a space between the hinge cover 332 (e.g., the hinge cover 260 of FIG. 4) and the first hinge plate 333-1, and a space between the hinge cover 332 and the second hinge plate 333-2.

According to an embodiment, the foldable electronic device 301 may include a first supporting member 321 (e.g., the first bracket assembly 217 of FIG. 4). The first supporting member 321 may be disposed in the first housing 311. For example, the first supporting member 321 may be disposed in an inner space of the first housing 311. The first supporting member 321 may serve as a structure for components disposed in the first housing 311. The first supporting member 321 may be referred to as a 'supporting member.' According to an embodiment, the inner space S of the hinge assembly 330 may include a space between a portion of the first supporting member 321 and the first hinge plate 333-1. The inner space S may include a space between a portion of the second supporting member 322 and the second hinge plate 333-2.

According to an embodiment, the first supporting member 321 may include a first seating recess 3211. The first seating recess 3211 may be recessed from a surface facing the first thickness direction (+Z direction) of the first supporting member 321 toward the second thickness direction (-Z direction). The first seating recess 3211 may be formed in an area of the inner space S of the hinge assembly 330 in the first supporting member 321. For example, the first seating recess 3211 may be formed in an area adjacent to the inner space S area. For example, the first seating recess 3211 may be formed on a second direction (-Y direction) side of the hinge cover 332 when the foldable electronic device 301 is in an unfolded state. A first fixing portion 341-1 of the flexible printed circuit board 340 may be seated in the first seating recess 3211. The first seating recess 3211 may be referred to as a "seating recess."

According to an embodiment, the first supporting member 321 may include a first through hole 3212. The first through hole 3212 may be formed on an opposite side of the folding plane F with respect to the first seating recess 3211. For example, the first through hole 3212 may be formed on a second direction (-Y direction) side of the first seating recess 3211 when the foldable electronic device 301 is in an unfolded state. The first through hole 3212 may be formed to penetrate the first supporting member 321 in the first thickness direction (+Z direction) and/or the second thickness direction (-Z direction). The flexible printed circuit board 340 may pass through the first through hole 3212. For example, a portion of the flexible printed circuit board 340 disposed on the first thickness direction (+Z direction) side of the first supporting member 321 (e.g., a first outer bent portion 343-1) may extend to the second thickness direction (-Z direction) side of the first supporting member 321 by passing through the first through hole 3212. The first through hole 3212 may be referred to as a "through hole."

According to an embodiment, the first supporting member 321 may include a first rib 3213. The first rib 3213 may be disposed between the first seating recess 3211 and the first through hole 3212. The first rib 3213 may protrude from a lower surface 3211a of the first seating recess 3211 in the first thickness direction (+Z direction). For example, the first rib 3213 may form a wall defining the first through hole 3212 and/or may form a wall defining the first seating recess 3211. For example, the first rib 3213 may be understood as a portion formed when the first seating recess 3211 is formed by being recessed from a surface facing the first thickness direction (+Z direction) of the first supporting member 321 in the second thickness direction (-Z direction). The first rib 3213 may be referred to as a "rib."

According to an embodiment, the first supporting member 321 may include a first inner wall 3214. The first inner wall 3214 may protrude from the lower surface 3211a of the first seating recess 3211 in the first thickness direction (+Z direction). The first inner wall 3214 may form a wall on the folding plane F side of the first seating recess 3211. For example, the first inner wall 3214 may be understood as a wall on the first direction (+Y direction) side of the first seating recess 3211 formed as the first seating recess 3211 is recessed. The first inner wall 3214 may be referred to as an "inner wall."

According to an embodiment, the foldable electronic device 301 may include a second housing 312 (e.g., the second housing 220 of FIGS. 2 to 4). For example, inside the second housing 312, a second supporting member 322, a portion of the flexible printed circuit board 340, a second holder 352, a second front plate 354, and/or a second sealing member 356 may be disposed. The second housing 312 may be referred to as a 'housing.'

The description of the first supporting member 321, the first seating recess 3211, the first through hole 3212, the first rib 3213, and the first inner wall 3214 of the first housing 311 may be applied to the description of the second supporting member 322, the second seating recess 3221, the second through hole 3222, the second rib 3223, and the second inner wall 3224 of the second housing 312. Hereinafter, descriptions of components to which descriptions of other embodiments are applied are omitted.

According to an embodiment, the foldable electronic device 301 may include a flexible printed circuit board 340 (e.g., the flexible connecting member 280 of FIG. 4). The flexible printed circuit board 340 may be disposed in the first housing 311, the second housing 312, and the inner space S of the hinge assembly 330. For example, the flexible printed circuit board 340 may extend from the first housing 311 to the second housing 312 through the inner space S of the hinge assembly 330.

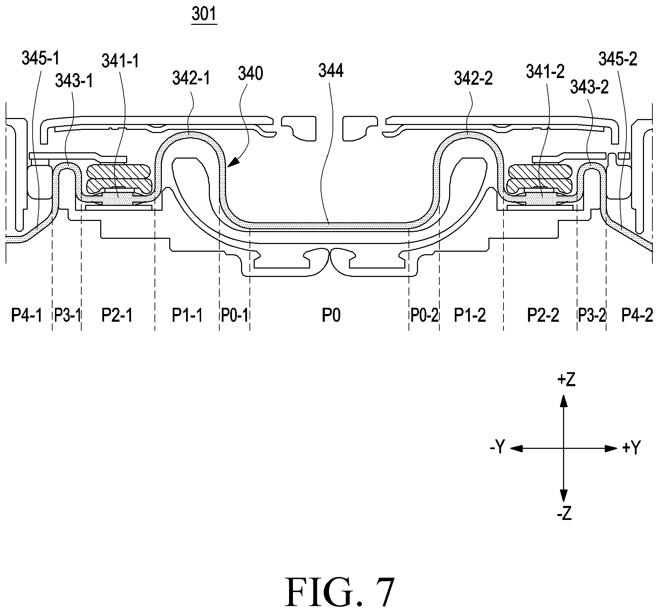

According to an embodiment, the flexible printed circuit board 340 may pass through the first through hole 3212. For example, a first outer bent portion 343-1 disposed on the first thickness direction (+Z direction) side of the first supporting member 321 (e.g., the first rib 3213) and a first extension (e.g., the first extension 345-1 of FIG. 7) disposed on the second thickness direction (-Z direction) side of the first supporting member 321 may be connected to each other by the flexible printed circuit board 340 passing through the first through hole 3212.

According to an embodiment, the flexible printed circuit board 340 may pass through the second through hole 3222. For example, a second outer bent portion 343-2 disposed in the first thickness direction (+Z direction) of the second supporting member 322 (e.g., the second rib 3223) and a second extension (e.g., the second extension 345-2 of FIG. 7) disposed in the second thickness direction (-Z direction) of the second supporting member 322 may be connected to each other by the flexible printed circuit board 340 passing through the second through hole 3222.

According to an embodiment, the flexible printed circuit board 340 may be disposed between the first sealing member 355 and the first rib 3213. For example, the flexible printed circuit board 340 may be disposed on the first direction (+Y direction) side of the first sealing member 355 and on the second direction (-Y direction) side of the first rib 3213. The flexible printed circuit board 340 may extend in tight contact with the first rib 3213. For example, the flexible printed circuit board 340 may be brought into tight contact with the first rib 3213 by the first sealing member 355 being fitted into the first through hole 3212. Accordingly, even though the flexible printed circuit board 340 passes through the first through hole 3212, waterproofing and/or dust protection at the first through hole 3212 may be realized.

According to an embodiment, the flexible printed circuit board 340 may be disposed between the second sealing member 356 and the second rib 3223. For example, the flexible printed circuit board 340 may be disposed on the second direction (-Y direction) side of the second sealing member 356 and on the first direction (+Y direction) side of the second rib 3223. The flexible printed circuit board 340 may extend in tight contact with the second rib 3223. For example, the flexible printed circuit board 340 may be brought into tight contact with the second rib 3223 by the second sealing member 356 being fitted into the second through hole 3222. Accordingly, even though the flexible printed circuit board 340 passes through the second through hole 3222, waterproofing and/or dust protection at the second through hole 3222 may be realized.

According to an embodiment, the flexible printed circuit board 340 may include a portion capable of bending deformation. For example, when the foldable electronic device 301 is in a folded state, a length of a space in which the flexible printed circuit board 340 may be disposed between the first through hole 3212 and the second through hole 3222 may be larger than a length of a space in which the flexible printed circuit board 340 may be disposed between the first through hole 3212 and the second through hole 3222 when the foldable electronic device 301 is in an unfolded state. The flexible printed circuit board 340 may be provided in a bent form and may include a portion capable of bending deformation to correspond to the length of the space in which the flexible printed circuit board 340 may be disposed between the first through hole 3212 and the second through hole 3222 increasing as the foldable electronic device 301 changes from an unfolded state to a folded state. For example, the flexible printed circuit board 340 may include a first inner bent portion 342-1 and a second inner bent portion 342-2. This is described below in detail.

According to an embodiment, the flexible printed circuit board 340 may include a first fixing portion 341-1. The first fixing portion 341-1 may be disposed on the first thickness direction (+Z direction) side of the first supporting member 321. For example, the first fixing portion 341-1 may be disposed in the inner space S of the hinge assembly 330. The first fixing portion 341-1 may be referred to as a "fixing portion."

According to an embodiment, the first fixing portion 341-1 may be fixed to the first supporting member 321 of the first housing 311. The first fixing portion 341-1 may be seated in the first seating recess 3211. For example, the first fixing portion 341-1 may be inserted and seated in the first seating recess 3211. For example, the first fixing portion 341-1 may be attached to the lower surface of the first seating recess 3211. For example, the first fixing portion 341-1 may be attached to the lower surface of the first seating recess 3211 by an attachment member (e.g., an adhesive member A1). However, the disclosure is not limited thereto, and the first fixing portion 341-1 may be coupled to the lower surface of the first seating recess 3211 through a separate mechanical coupling structure. When the first fixing portion 341-1 is seated (or inserted) in the first seating recess 3211, two opposite ends of the first fixing portion 341-1 of the flexible printed circuit board 340 (e.g., the first end 341-11 and the second end 341-12 of FIG. 6) may be bent in the first thickness direction (+Z direction).

According to an embodiment, the flexible printed circuit board 340 may include a first inner bent portion 342-1. The first inner bent portion 342-1 may be a portion of the flexible printed circuit board 340 bent on the first housing 311 side when the foldable electronic device 301 is in an unfolded state. The first inner bent portion 342-1 may be formed to be convex in the first thickness direction (+Z direction) when the foldable electronic device 301 is in an unfolded state. The first inner bent portion 342-1 may be connected to the first end 341-11 bent on the folding plane F side of the first fixing portion 341-1. For example, the first inner bent portion 342-1 may extend from the first end 341-11 facing the first direction (+Y direction) of the first fixing portion 341-1. At least a portion of the first inner bent portion 342-1 may be disposed on the first thickness direction (+Z direction) side of the first supporting member 321. At least a portion of the first inner bent portion 342-1 may be disposed on the first thickness direction (+Z direction) side of the hinge cover 332. The first inner bent portion 342-1 may be disposed in the inner space S of the hinge assembly 330. The first inner bent portion 342-1 may be referred to as an "inner bent portion."

According to an embodiment, the first inner bent portion 342-1 may be bent at least once by the hinge cover 332. For example, the first inner bent portion 342-1 may be bent to surround the hinge cover 332. A first cover end 3321 of the hinge cover 332 may be disposed inside the bent shape of the first inner bent portion 342-1. For example, the first inner bent portion 342-1 may be a portion that surrounds the periphery of the first cover end 3321 when the foldable electronic device 301 is in an unfolded state.

According to an embodiment, as the first fixing portion 341-1 is seated in the first seating recess 3211, the flexible printed circuit board 340 may be bent at least twice between the hinge cover 332 and the first rib 3213. According to an embodiment, the flexible printed circuit board 340 may be bent twice between the hinge cover 332 and the first rib 3213 as illustrated in FIGS. 5 and 6. For example, the flexible printed circuit board 340 may have a camel hump-shaped cross-section between the hinge cover 332 and the first rib 3213. Due to such a structure, a sufficient extension length of the flexible printed circuit board 340 may be secured, so when the foldable electronic device 301 is converted to a folded state, tension acting on the flexible printed circuit board 340 and damage to the flexible printed circuit board 340 may be prevented or decreased.

According to an embodiment, the first inner bent portion 342-1 may be a portion that is deformed when the foldable electronic device 301 is converted from an unfolded state to a folded state. For example, a curvature (or radius of curvature R) of the first inner bent portion 342-1 when the foldable electronic device 301 is in an unfolded state may be different from a curvature (or radius of curvature) of the first inner bent portion 342-1 when the foldable electronic device 301 is in a folded state. For example, the first inner bent portion 342-1 may be unfolded compared to the state illustrated in FIG. 5 as the foldable electronic device 301 is converted from an unfolded state to a folded state.

According to an embodiment, the first inner bent portion 342-1 may include a first portion 342-11 and a second portion 342-12 disposed on two opposite sides of a peak portion of the first inner bent portion 342-1 and parallel to the first thickness direction (+Z direction) and/or the second thickness direction (-Z direction). The first portion 342-11 may be disposed on an opposite side of the folding plane F (e.g., the second direction (-Y direction) side) with respect to the peak of the first inner bent portion 342-1. The second portion 342-12 may be disposed on the folding plane F side (e.g., the first direction (+Y direction) side) with respect to the peak of the first inner bent portion 342-1.

According to an embodiment, the first inner bent portion 342-1 may include a third portion 342-13. The third portion 342-13 may be a portion disposed between the first portion 342-11 and the second portion 342-12. The third portion 342-13 may be a bent portion. For example, the third portion 342-13 may be a portion bent convexly toward the first thickness direction (+Z direction) in the first inner bent portion 342-1.

According to an embodiment, the flexible printed circuit board 340 may include a first outer bent portion 343-1. The first outer bent portion 343-1 may be connected to the second end 341-12 of the first fixing portion 341-1. The second end 341-12 may be an end opposite to the first end 341-11. For example, the first outer bent portion 343-1 may extend from the second end 341-12 facing the second direction (-Y direction) of the first fixing portion 341-1. For example, the first outer bent portion 343-1 may be disposed in the inner space S of the hinge assembly 330. The first outer bent portion 343-1 may be referred to as an "outer bent portion."

According to an embodiment, the first outer bent portion 343-1 may be formed to be convex in the first thickness direction (+Z direction). The first outer bent portion 343-1 may be formed in tight contact with the first rib 3213. For example, the first outer bent portion 343-1 may be understood as a portion protruding in the first thickness direction (+Z direction) by the first rib 3213 as the first fixing portion 341-1 is inserted and seated in the first seating recess 3211. However, the disclosure is not limited thereto and, when the first rib 3213 is not provided in the first supporting member 321, the first outer bent portion 343-1 may not be formed.

According to an embodiment, a portion of the first outer bent portion 343-1 may be disposed inside the first through hole 3212. For example, a portion of the first outer bent portion 343-1 disposed on the second direction (-Y direction) side of the first rib 3213 may be disposed inside the first through hole 3212 and may be disposed between the first sealing member 355 and the first rib 3213.

According to an embodiment, the second inner bent portion 342-2 may have a shape that is symmetric to the shape of the first inner bent portion 342-1 with respect to the folding plane F. The description of the first fixing portion 341-1, the first inner bent portion 342-1, and the first outer bent portion 343-1 of the first housing 311 may be applied to the description of the second fixing portion 341-2, the second inner bent portion 342-2, and the second outer bent portion 343-2 of the second housing 312. Hereinafter, descriptions of components to which descriptions of other embodiments are applied are omitted.

According to an embodiment, the flexible printed circuit board 340 may include a central portion 344. The central portion 344 may be disposed on the hinge cover 332. The central portion 344 may be disposed in the inner space S of the hinge assembly 330. For example, the central portion 344 may be a portion that is in tight contact with the hinge cover 332 when the foldable electronic device 301 is in an unfolded state. The first inner bent portion 342-1 and the second inner bent portion 342-2 may be connected by the central portion 344. According to an embodiment, the second end 342-12 of the first inner bent portion 342-1 may be connected to a first end 344-1 of the central portion 344.

According to an embodiment, the flexible printed circuit board 340 may include a connector portion, although not illustrated in the drawings. The connector portion may be provided to transfer signals transferred through the flexible printed circuit board 340 to other electronic components.

According to an embodiment, at least a portion of the flexible printed circuit board 340 may be received in the inner space S of the hinge assembly 330. For example, the first fixing portion 341-1, the first inner bent portion 342-1, the first outer bent portion 343-1, the second fixing portion 341-2, the second inner bent portion 342-2, and/or the second outer bent portion 343-2 of the flexible printed circuit board 340 may be received in the inner space S.

According to an embodiment, the hinge assembly 330 may include a first hinge plate 333-1. The first hinge plate 333-1 may be disposed on the first thickness direction (+Z direction) side of the first supporting member 321. The first hinge plate 333-1 may be disposed on the first thickness direction (+Z direction) side of the flexible printed circuit board 340. The first hinge plate 333-1 may be disposed on the first thickness direction (+Z direction) side of the hinge cover 332. The first hinge plate 333-1 may be fixed to the first supporting member 321. The first hinge plate 333-1 may cover at least a portion of the flexible printed circuit board 340, the first holder 351, the first front plate 353, and the first sealing member 355. The first hinge plate 333-1 may be referred to as a "hinge plate."

According to an embodiment, the hinge assembly 330 may include a second hinge plate 333-2. The second hinge plate 333-2 may be disposed on the first thickness direction (+Z direction) side of the second supporting member 322. The second hinge plate 333-2 may be disposed on the first thickness direction (+Z direction) side of the flexible printed circuit board 340. The second hinge plate 333-2 may be disposed on the first thickness direction (+Z direction) side of the hinge cover 332. The second hinge plate 333-2 may be fixed to the second supporting member 322. The second hinge plate 333-2 may cover at least a portion of the flexible printed circuit board 340, the second holder 352, the second front plate 354, and the second sealing member 356. The second hinge plate 333-2 may be referred to as a "hinge plate."

According to an embodiment, the first hinge plate 333-1 and the second hinge plate 333-2 may cover the inner space of the hinge assembly 330 together with the hinge cover 332.

According to an embodiment, the hinge assembly 330 may include a central portion 334. The central portion 334 may be a portion disposed between the first hinge plate 333-1 and the second hinge plate 333-2 when the foldable electronic device 301 is in an unfolded state. The central portion 334 may be configured to support a flexible display (e.g., the display module 160 of FIG. 1, the display 230 of FIGS. 2 to 4) when the foldable electronic device 301 is in an unfolded state, a folded state, or an intermediate state. According to an embodiment, the central portion 334 may be formed so that an end of the first hinge plate 333-1 and an end of the second hinge plate 333-2 each abut against each other. However, this is not necessarily limited thereto, and the shape of the central portion 334 may vary. According to an embodiment, application of the hinge assembly 330 in which the central portion 334 is omitted is also possible. According to an embodiment, the central portion 334 may have a shape extending long along a folding axis (e.g., the folding axis A of FIG. 2), and may also be referred to as a "center bar."

According to an embodiment, the foldable electronic device 301 may further include interlocking members connected to the first hinge plate 333-1 and the second hinge plate 333-2, respectively, to interlock mechanical movement between the first hinge plate 333-1 and the second hinge plate 333-2. For example, as an example of the interlocking member, an interlocking gear or an interlocking arm and slider structure may be provided.

According to an embodiment, the foldable electronic device 301 may include a first holder 351. The first holder 351 may be disposed on the first thickness direction (+Z direction) side of the first fixing portion 341-1. The first holder 351 may be disposed between the first inner bent portion 342-1 and the first outer bent portion 343-1. At least a portion of the first holder 351 may be seated in the first seating recess 3211. The first holder 351 may fix the first fixing portion 341-1 to the first seating recess 3211. For example, a force may be applied to cause the first fixing portion 341-1 to be separated from the first seating recess 3211 due to elastic restoring force of the flexible printed circuit board 340, and the first holder 351 may prevent the first fixing portion 341-1 from being separated from the first seating recess 3211 by pressing the first fixing portion 341-1. According to an embodiment, the first holder 351 may be attached to the first fixing portion 341-1 by an attachment member (e.g., the adhesive member A2). The first holder 351 may be referred to as a "holder."

The description of the first holder 351 may also be applied to the second holder 352.

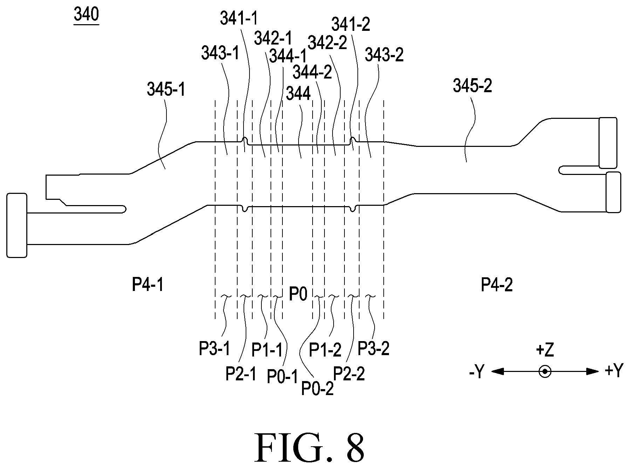

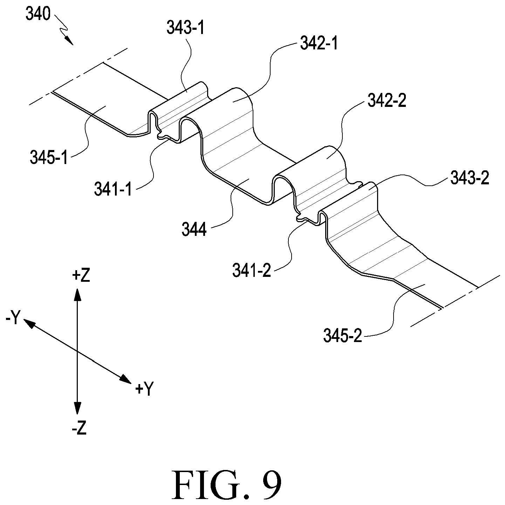

FIG. 7 is a perspective view illustrating a flexible printed circuit board according to an embodiment of the disclosure. FIG. 8 is a cross-sectional view illustrating a partial configuration of an electronic device according to an embodiment of the disclosure. FIG. 9 is a front view illustrating a flexible printed circuit board according to an embodiment of the disclosure.

FIG. 7 is a perspective view illustrating the central portion 344 and its surrounding portions of the flexible printed circuit board 340. FIG. 8 is a cross-sectional view illustrating a hinge portion divided into a plurality of areas along a length direction of the foldable electronic device 301. FIG. 9 is a view dividing the plurality of areas of the flexible printed circuit board 340.

Detailed configurations of the foldable electronic device 301 according to an embodiment of the disclosure that are not described below may be the same as the detailed configurations of the electronic device (e.g., the electronic device 101, the foldable electronic device 301) according to an embodiment of the disclosure described with reference to FIGS. 1 to 6. Descriptions of the same detailed components are omitted within the overlapping scope.

According to an embodiment, the flexible printed circuit board 340 may include a plurality of conductive lines formed along a length direction of the foldable electronic device 301 for signal transmission between a component (e.g., a processor) disposed in the first housing 311 and a component disposed in the second housing 312. The plurality of conductive lines may include various conductive lines such as conductive lines for digital signal transmission, conductive lines for RF signal transmission, and conductive lines for supplying power. The conductive lines for electrical signal transmission may be implemented by disposing a plurality of conductive lines on the flexible printed circuit board 340. For example, the plurality of conductive lines may be configured to include a metal (e.g., copper) material. Accordingly, the plurality of conductive lines in the flexible printed circuit board 340 may form a metal layer. The flexible printed circuit board 340 may include an insulation layer (e.g., coverlay) disposed adjacent to the metal layer to electrically insulate the conductive lines from other conductive lines.

The flexible printed circuit board 340 of the disclosure may be divided into a plurality of areas along a length direction of the foldable electronic device 301. The flexible printed circuit board 340 of the disclosure may be configured so that one portion includes an area where the metal layer is formed with a thin thickness to secure repetitive driving life, and another portion includes an area where the metal layer is formed with a relatively thick thickness to reduce DC resistance. The portion where the metal layer is formed with a relatively thick thickness may enable stable and efficient supply of power through the flexible printed circuit board 340. According to an embodiment, when the metal layer thickness is relatively thin, it may be more flexible than a portion where the metal layer thickness is relatively thicker, and conversely, when the metal layer thickness is relatively thick, it may be more rigid than a portion where the metal layer thickness is relatively thinner.

According to an embodiment, the metal layer thickness of the central portion 344 may be formed relatively thicker than other areas. In other words, the central portion 344 may be relatively rigid. For example, a P0 area, which is an area where the central portion 344 is formed in the flexible printed circuit board 340, may have a metal layer formed relatively thicker than other areas. For example, the central portion 344 may have lower DC resistance compared to the first inner bent portion 342-1 (e.g., P1-1 area) and/or the second inner bent portion 342-2 (e.g., P1-2 area). Further, e.g., the central portion 344 may have stronger structural rigidity compared to the first inner bent portion 342-1 (e.g., P1-1 area) and/or the second inner bent portion 342-2 (e.g., P1-2 area). The central portion 344 is a portion disposed between the first inner bent portion 342-1 and the second inner bent portion 342-2, and by forming the metal layer of the central portion 344 thick, it may support opposing ends of the first inner bent portion 342-1 and/or the second inner bent portion 342-2. This thicker, more rigid central portion 344 thereby may act as a structural backbone that stabilizes the two thinner, more flexible inner bent portions 342-1, 342-2 during folding and unfolding. This structural backbone may prevent torsional twisting and lateral misalignment of the flexible portions, ensuring they follow a predictable and controlled bending path. This guided motion may significantly reduce localized stress concentrations at the curve of the bent portions, preventing premature fatigue failure of the thin signal lines within them. Accordingly, the first inner bent portion 342-1 and the second inner bent portion 342-2 may have a bent shape according to the designed shape.

According to an embodiment, the first inner bent portion 342-1 in the flexible printed circuit board 340 may have a metal layer formed relatively thinner than other areas. For example, a P1-1 area, which is an area where the first inner bent portion 342-1 is formed in the flexible printed circuit board 340, may have a metal layer formed relatively thinner than other areas (e.g., the central portion 344 and/or the first fixing portion 341-1). According to an embodiment, the metal layer of the first inner bent portion 342-1 may be relatively thinner than other areas (e.g., the central portion 344 and/or the first fixing portion 341-1), but may include a material more flexible than the metal layer relatively thicker than other areas (e.g., the central portion 344 and/or the first fixing portion 341-1). For example, the first inner bent portion 342-1 may be formed to be relatively flexible. For example, the first inner bent portion 342-1 may have high DC resistance due to a thin metal layer compared to the central portion 344 (e.g., P0 area) and/or the first fixing portion 341-1 (e.g., P2-1 area). On the other hand, by including a thick flexible material, the first inner bent portion 342-1 may have flexible structural rigidity compared to the central portion 344 (e.g., P0 area) and/or the first fixing portion 341-1 (e.g., P2-1 area). In other words, the first inner bent portion 342-1 may have higher durability than the central portion 344 (e.g., P0 area) and/or the first fixing portion 341-1 (e.g., P2-1 area). The first inner bent portion 342-1 is a portion that protrudes and bends from the central portion 344 and/or the first fixing portion 341-1 in the first thickness direction (+Z direction) and, when the metal layer thickness of the first inner bent portion 342-1 is formed thin, changes in the designed shape of the first inner bent portion 342-1 may be easy. While the embodiment shown illustrates a symmetrical flexible printed circuit board 340 with the first and second inner bent portion 342-1, 342-2, the principles of the invention are equally applicable to an asymmetrical design. For example, the flexible printed circuit board 340 may be configured with only a single inner bent portion formed to be thin, adjacent to a thicker central or fixing portion, to accommodate a device with an asymmetrical folding mechanism or a single primary folding axis. The first inner bent portion 342-1 is a portion that is deformed when the foldable electronic device 301 is converted from an unfolded state to a folded state and, when the metal layer thickness of the first inner bent portion 342-1 is formed thin, the shape of the first inner bent portion 342-1 may be easily deformed to prevent or reduce damage to the flexible printed circuit board 340.

According to an embodiment, the second inner bent portion 342-2 in the flexible printed circuit board 340 may have a metal layer formed relatively thinner than other areas. For example, a P1-2 area, which is an area where the second inner bent portion 342-2 is formed in the flexible printed circuit board 340, may have a metal layer formed relatively thinner than other areas (e.g., the central portion 344). According to an embodiment, the metal layer of the second inner bent portion 342-2 may be relatively thinner than other areas (e.g., the central portion 344 and/or the second fixing portion 341-2), but may include a material more flexible than the metal layer relatively thicker than other areas (e.g., the central portion 344 and/or the second fixing portion 341-2). For example, the second inner bent portion 342-2 may be formed to be relatively flexible. For example, the second inner bent portion 342-2 may have high DC resistance due to a thin metal layer compared to the central portion 344 (e.g., P0 area) and/or the second fixing portion 341-2 (e.g., P2-2 area). On the other hand, by including a thick flexible material, the second inner bent portion 342-2 may have flexible structural rigidity compared to the central portion 344 (e.g., P0 area) and/or the second fixing portion 341-2 (e.g., P2-2 area). In other words, the second inner bent portion 342-2 may have higher durability than the central portion 344 (e.g., P0 area) and/or the second fixing portion 341-2 (e.g., P2-2 area). The second inner bent portion 342-2 is a portion that protrudes and bends from the central portion 344 and/or the second fixing portion 341-2 in the first thickness direction (+Z direction) and, when the metal layer thickness of the second inner bent portion 342-2 is formed thin, changes in the designed shape of the second inner bent portion 342-2 may be easy. The second inner bent portion 342-2 is a portion that is deformed when the foldable electronic device 301 is converted from an unfolded state to a folded state and, when the metal layer thickness of the second inner bent portion 342-2 is formed thin, the shape of the second inner bent portion 342-2 may be easily deformed to prevent or reduce damage to the flexible printed circuit board 340.

According to an embodiment, the area PO-1 between the first inner bent portion 342-1 and the central portion 344 and the area P0-2 between the second inner bent portion 342-2 and the central portion 344 in the flexible printed circuit board 340 may have metal layer thicknesses formed thicker than the first inner bent portion 342-1 and the second inner bent portion 342-2, and metal layer thickness formed thinner than the central portion 344. According to an embodiment, the area PO-1 between the first inner bent portion 342-1 and the central portion 344 and the area P0-2 between the second inner bent portion 342-2 and the central portion 344 may be formed to have a metal layer with an intermediate thickness. This intermediate thickness may create a graduated transition in stiffness between the highly flexible, thin areas P1-1, P1-2 and the more rigid, thick central area P0. Such a graduated transition may be critical for preventing the formation of a sharp stress riser at the boundary, which is a common point of mechanical failure in flexible circuits. By smoothing the stress distribution during bending, this design may dissipate mechanical strain over a larger area, thereby significantly increasing the overall fatigue life and reliability of the flexible printed circuit board.

According to an embodiment, for convenience of classification, the first inner bent portion 342-1 and the second inner bent portion 342-2 of the flexible printed circuit board 340 may be referred to as a first area having a relatively thin metal layer, and the central portion 344 of the flexible printed circuit board 340 may be referred to as a third area having a relatively thick metal layer compared to the first inner bent portion 342-1 and the second inner bent portion 342-2. Further, an area between the first inner bent portion 342-1 and the central portion 344 and between the second inner bent portion 342-2 and the central portion 344 may be referred to as a second area having a metal layer of an intermediate thickness. The definition of a first, second, and third area based on the degree of bending may provide a functional zoning of the circuit. This may have the technical effect of creating a "strain map" across the flexible portion, allowing for a bespoke, highly engineered solution where material properties are precisely tailored and applied only where they are functionally required. This may move beyond a conventional, uniform approach to one of targeted, localized optimization. According to an embodiment, the second area may correspond to a first end 344-1 and a second end 344-2 of the central portion 344. As such, in the flexible printed circuit board 340 according to an embodiment, the first area, the second area, and the third area may correspond to the first inner bent portion 342-1 (or the second inner bent portion 342-2), the first end 344-1 (or the second end 344-2) of the central portion 344, and the central portion 344 of the first flexible printed circuit board 340, respectively, but the boundary of each area is not necessarily limited to the embodiment illustrated in FIGS. 8 and 9 and the above-mentioned embodiment. According to an embodiment, a portion of the first inner bent portion 342-1 (or the second inner bent portion 342-2) may be included in the second area having a metal layer of an intermediate thickness. Or, according to another embodiment, the first end 344-1 and the second end 344-2 of the central portion 344 may be included in the first area having a metal layer of a thin thickness, or may be included in the third area having a metal layer of a thick thickness. It should be noted that the boundaries in FIGS. 8 and 9 are for convenience of description.

According to an embodiment, the first fixing portion 341-1 of the flexible printed circuit board 340 may also have a metal layer thickness formed thicker than the metal layer thickness of the first inner bent portion 342-1. For example, a P2-1 area, which is an area where the first fixing portion 341-1 is formed in the flexible printed circuit board 340, may have a metal layer formed thicker compared to the first inner bent portion 342-1 (e.g., P1-1 area). For example, a P2-1 area, which is an area where the first fixing portion 341-1 is formed in the flexible printed circuit board 340, may have stronger structural rigidity compared to the first inner bent portion 342-1 (e.g., P1-1 area). The first fixing portion 341-1 is a portion fixed to the first seating recess 3211, and the metal layer thickness of the first fixing portion 341-1 may be formed thicker than the adjacent first inner bent portion 342-1, so that the first fixing portion 341-1 may be firmly fixed (or attached) to the first seating recess 3211. According to an embodiment, the first fixing portion 341-1 may include a metal layer having a thickness that is smaller than the thickness of the central portion 344 but thicker than the metal layer thickness of the first inner bent portion 342-1. The first fixing portion 341-1 may also be referred to as a second area having a metal layer of an intermediate thickness.

According to an embodiment, the second fixing portion 341-2 of the flexible printed circuit board 340 may also have a metal layer thickness formed thicker than the metal layer thickness of the second inner bent portion 342-2. For example, a P2-2 area, which is an area where the second fixing portion 341-2 is formed in the flexible printed circuit board 340, may have a metal layer formed thicker compared to the second inner bent portion 342-2 (e.g., P1-2 area). For example, a P2-2 area, which is an area where the second fixing portion 341-2 is formed in the flexible printed circuit board 340, may have stronger structural rigidity compared to the second inner bent portion 342-2 (e.g., P1-2 area). The second fixing portion 341-2 is a portion fixed to the second seating recess 3221, and the metal layer thickness of the second fixing portion 341-2 may be formed thicker than the adjacent second inner bent portion 342-2, so that the second fixing portion 342-1 may be firmly fixed (or attached) to the second seating recess 3221. According to an embodiment, the second fixing portion 341-2 may include a metal layer having a thickness that is smaller than the thickness of the central portion 344 but thicker than the metal layer thickness of the second inner bent portion 342-2. The second fixing portion 342-2 may also be referred to as a second area having a metal layer of an intermediate thickness.

According to an embodiment, the first outer bent portion 343-1 may include a metal layer thicker than the thickness of the first fixing portion 341-1. For example, the first outer bent portion 343-1 (e.g., P3-1 area) may have stronger structural rigidity compared to the first inner bent portion 342-1 (e.g., P1-1 area) and/or the first fixing portion 341-1 (e.g., P2-1 area). The first outer bent portion 343-1 is a portion that bends in tight contact with the first rib 3213, and the height and/or thickness of the first rib 3213 may be smaller than the height and/or thickness of the first cover end 3321 of the hinge cover 332. Since less stress is applied to the first outer bent portion 343-1 that bends in tight contact with the first rib 3213 than to the first inner bent portion 342-1 that bends in tight contact with the first cover end 3321 of the hinge cover 332, DC resistance may be lowered by having a relatively thick metal layer. According to an embodiment, a first extension 345-1 connected to the first outer bent portion 343-1 may also include a metal layer thicker than the thickness of the first fixing portion 341-1. According to an embodiment, the first outer bent portion 343-1 and the first extension 345-1 may include a metal layer having a relatively thick thickness. The first outer bent portion 343-1 and the first extension 345-1 may be referred to as a third area having a thick thickness.

According to an embodiment, the second outer bent portion 343-2 may include a metal layer thicker than the thickness of the second fixing portion 341-2. For example, the second outer bent portion 343-2 (e.g., P3-2 area) may have stronger structural rigidity compared to the second inner extension 342-2 (e.g., P1-2 area) and/or the second fixing portion 341-2 (e.g., P2-2 area). The second outer bent portion 343-2 is a portion that bends in tight contact with the second rib 3223, and the height and/or thickness of the second rib 3223 may be smaller than the height and/or thickness of the cover end 3322 of the hinge cover 332. Since less stress is applied to the second outer bent portion 343-2 that bends in tight contact with the second rib 3223 than to the second inner bent portion 342-2 that bends in tight contact with the cover end 3322 of the hinge cover 332, DC resistance may be lowered by having a relatively thick metal layer. According to an embodiment, a second extension 345-2 connected to the second outer bent portion 343-2 may also include a metal layer thicker than the thickness of the second fixing portion 341-2. According to an embodiment, the second outer bent portion 343-2 and the second extension 345-2 may include a metal layer having a relatively thick thickness. The second outer bent portion 343-2 and the second extension 345-2 may be referred to as a third area having a thick thickness.

However, it should be noted that in the embodiment, the thickness of the metal layer of the first outer bent portion 343-1 and the first extension 345-1, and the thickness of the metal layer of the second outer bent portion 343-2 and the second extension 345-2 may be set differently according to embodiments.

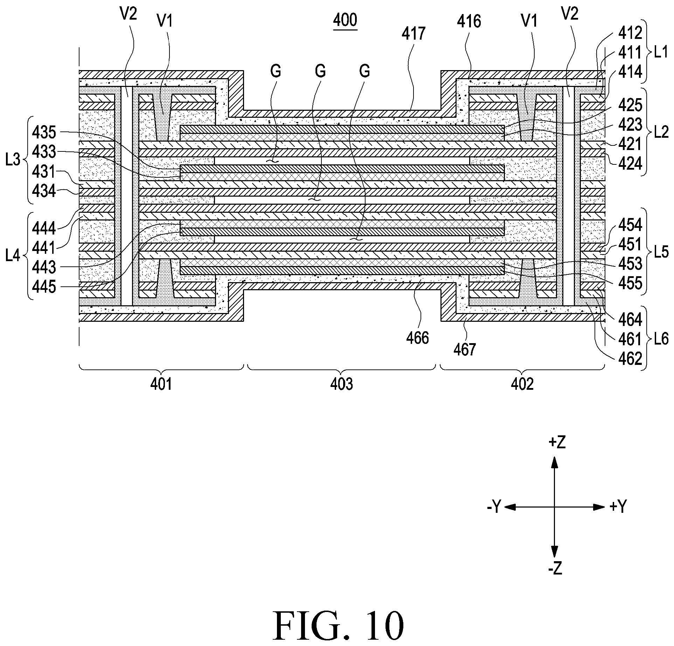

Hereinafter, through the embodiments of FIGS. 10 to 20, a flexible printed circuit board 400 having different metal layer thicknesses in a plurality of areas divided along a length direction of an electronic device and a manufacturing method thereof are described.

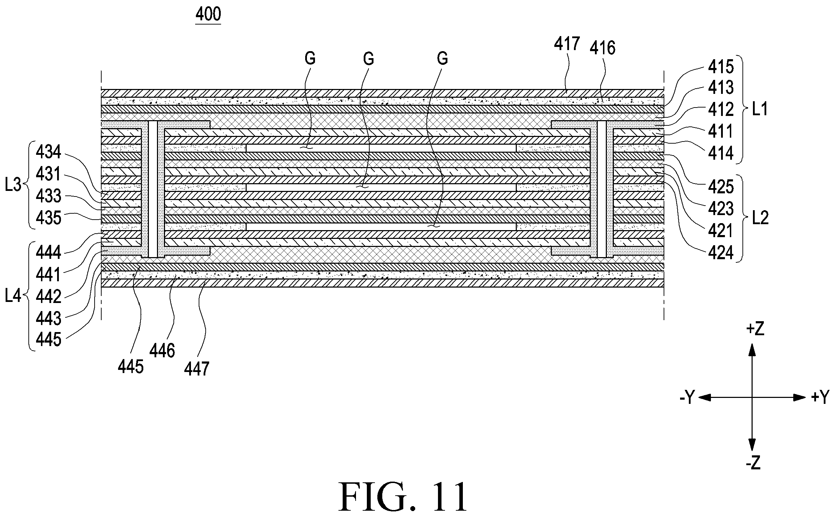

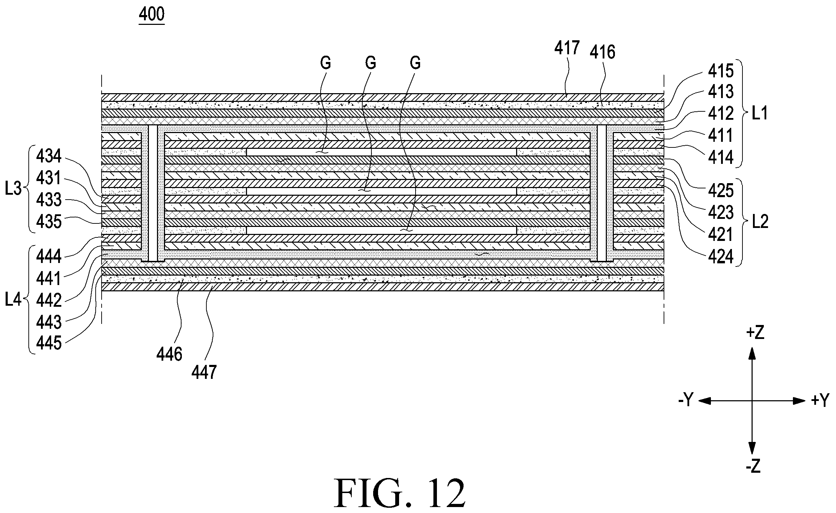

FIG. 10 is a cross-sectional view illustrating a flexible printed circuit board according to an embodiment. FIG. 11 is a cross-sectional view illustrating a flexible printed circuit board according to an embodiment. FIG. 12 is a cross-sectional view illustrating a flexible printed circuit board according to an embodiment.

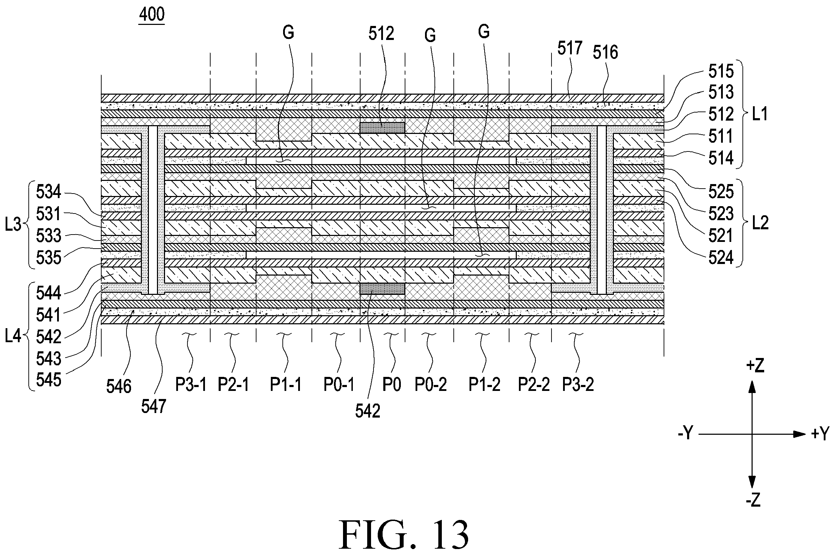

FIGS. 10 to 12 may show a flexible printed circuit board 400 according to a comparative embodiment for comparison with the flexible printed circuit board 500 according to an embodiment of the disclosure of FIGS. 13 to 15 to be described below. The following FIGS. 10 to 13 and 15 may show an enlarged view illustrating a portion of a cross-section in a state in which a plurality of layers are stacked in the flexible printed circuit board.

Referring to FIG. 10, the flexible printed circuit board 400 according to an embodiment (comparative embodiment) may include a layered structure (or stacked structure) of a plurality of layers L1, L2, L3, L4, L5, L6. For example, in FIG. 10, one side and the other side of the flexible printed circuit board 400 may include rigid portions 401, 402 for being fixed to a housing (e.g., the first housing structure 311 and the second housing structure 312 of FIGS. 2 to 3) along a length direction (e.g., Y-axis direction). Further, a flexible portion 403 may be included between the rigid portions 401, 402. According to an embodiment, the flexible portion 403 may be a portion corresponding to a folding area of the foldable electronic device (e.g., a folding area of the display (e.g., the folding area 231c of FIG. 2)). According to an embodiment, the flexible portion 403 may also be referred to as "a folding area of the flexible printed circuit board 400" corresponding to a folding area of the foldable electronic device (e.g., a folding area of the display (e.g., the folding area 231c of FIG. 2)).

According to various embodiments, the first rigid portion 401 and the second rigid portion 402 may form the same layer and the same structure. However, without limitations thereto, various arrangements and various layered structures may be formed. In the drawings, the first rigid portion 401 and the second rigid portion 402 are illustrated as having symmetrical shapes, but are not necessarily limited thereto. Hereinafter, the first rigid portion 401 and the flexible portion 403 are described, and description of the second rigid portion 402 may be omitted. The description of the first rigid portion 401 may be applied to the second rigid portion 402.

FIG. 10 illustrates a layered structure (or stacked structure) of the first rigid portion 401 and the flexible portion 403 of the flexible printed circuit board 400 including a plurality of conductive layers and insulation layers. Referring to FIG. 10, according to an embodiment (comparative embodiment), the first rigid portion 401 may include a first layer L1 including a 1-1th substrate layer 414 and a first conductive layer 411, a second layer L2 including a 2-1th substrate layer 424, a second conductive layer 421, a second insulation layer 423, and a 2-2th substrate layer 425, a third layer L3 including a 3-1th substrate layer 434, a third conductive layer 431, a third insulation layer 433, and a 3-2th substrate layer 435, a fourth layer L4 including a 4-1th substrate layer 444, a fourth conductive layer 441, a fourth insulation layer 443, and a 4-2th substrate layer 445, a fifth layer L5 including a 5-1th substrate layer 454, a fifth conductive layer 451, a fifth insulation layer 453, and a 5-2th substrate layer 455, and a sixth layer L6 including a 6-1th substrate layer 464 and a sixth conductive layer 461. According to an embodiment, the first layer L1, the second layer L2, the third layer L3, the fourth layer L4, the fifth layer L5, and the sixth layer L6 may be bonded in the first rigid portion 401. In the flexible portion 403, the second layer L2, the third layer L3, the fourth layer L4, and the fifth layer L5 may be designed to have air gaps G between adjacent layers. By having air gaps G between layers in the flexible portion 403, bending in the folding area of the flexible printed circuit board 400 may be performed smoothly.

The embodiment of FIG. 10 discloses the flexible printed circuit board 400 including six layers, but embodiments of the disclosure are not limited thereto. The flexible printed circuit board 400 may include fewer layers or more layers than illustrated in the drawing according to embodiments.

The second layer L2, the third layer L3, the fourth layer L4, and the fifth layer L5 may include a plurality of conductive lines, i.e., signal lines for transmission of signals and/or power. In the embodiment of FIG. 10, the second layer L2, the third layer L3, the fourth layer L4, and the fifth layer L5 adopt a stripline type signal transmission method according to an embodiment, illustrating that two substrate layers are included around (above and below) the conductive layer. However, this is not limited thereto, and for example, when adopting a signal transmission method according to a microstrip type signal transmission method, one of the two substrate layers around the conductive layer may be omitted. For example, the substrate layer may include polyimide and/or flexible copper clad laminate (FCCL), but the disclosure is not limited thereto. For example, the conductive layer includes copper but is not necessarily limited thereto. For example, the insulation layer may include a coverlay and/or adhesive material, but the disclosure is not limited thereto.

The first layer L1 and the sixth layer L6 may be layers in the outermost layer of the flexible printed circuit board 400. According to an embodiment, the first layer L1 and the sixth layer L6 are present in the first rigid portion 401 and may be omitted in the flexible portion 403. According to an embodiment, the first layer L1 and the sixth layer L6 may be layers provided for connection through inter-layer vias V1, V2. The first layer L1, the second layer L2, the third layer L3, the fourth layer L4, the fifth layer L5, and the sixth layer L6 may be electrically connected to each other through vias V2, but this may be implemented through a copper plating process using the first layer L1 and the sixth layer L6. In the embodiment of FIG. 10, metal layers 412, 462 according to a copper plating process for via connection may be additionally provided in the first layer L1 and the sixth layer L6, respectively.

According to an embodiment, shielding layers such as a metal paste 416 or a black layer 417 may be further provided on the outside of the first layer L1, and shielding layers such as a metal paste 466 or a black layer 467 may also be further provided on the outside of the sixth layer L6.

In the flexible printed circuit board 400 illustrated in FIG. 10, the second layer L2, the third layer L3, the fourth layer L4, and the fifth layer L5 may be used as layers for transmitting signals between the first housing structure and the second housing structure. Further, the second layer L2, the third layer L3, the fourth layer L4, and the fifth layer L5 may include conductive layers forming signal lines. In the embodiment of FIG. 10, the thickness of the conductive layer formed of metal (e.g., copper) is formed uniformly throughout the entire section of the flexible portion 403. With only the structure disclosed in FIG. 10, it may be difficult to achieve the purpose of increasing the repetitive driving life of the flexible printed circuit board 400 while lowering DC resistance to stably and efficiently supply power using the flexible printed circuit board 400.

In the embodiments (comparative embodiments) of FIGS. 11 and 12, another embodiment of a layered structure (or stacked structure) of the first rigid portion 401 and the flexible portion 403 of the flexible printed circuit board 400 including a plurality of conductive layers and insulation layers is illustrated. Referring to FIG. 11, according to an embodiment (comparative embodiment), the first rigid portion 401 may include a first layer L1 including a 1-1th substrate layer 414, a first conductive layer 411, a first insulation layer 413, and a 1-2th substrate layer 415, a second layer L2 including a 2-1th substrate layer 424, a second conductive layer 421, a second insulation layer 423, and a 2-2th substrate layer 425, a third layer L3 including a 3-1th substrate layer 434, a third conductive layer 431, a third insulation layer 433, and a 3-2th substrate layer 435, and a fourth layer L4 including a 4-1th substrate layer 444, a fourth conductive layer 441, a fourth insulation layer 443, and a 4-2th substrate layer 445. According to an embodiment, the first layer L1, the second layer L2, the third layer L3, and the fourth layer L4 may be bonded in the first rigid portion 401. In the flexible portion 403, the first layer L1, the second layer L2, the third layer L3, and the fourth layer L4 may be designed to have air gaps G between adjacent layers. By having air gaps G between layers in the flexible portion 403, bending in the folding area of the flexible printed circuit board 400 may be performed smoothly. According to an embodiment, shielding layers such as a metal paste 416 or a black layer 417 may be further provided on the outside of the first layer L1, and shielding layers such as a metal paste 446 or a black layer 447 may also be further provided on the outside of the fourth layer L4.

The embodiments (comparative embodiments) of FIGS. 11 and 12 disclose a flexible printed circuit board 400 including four layers. In the embodiments of FIGS. 11 and 12, metal layers 412, 442 according to a copper plating process for via connection may be additionally provided in the first layer L1 and the fourth layer L4, respectively. The embodiment of FIG. 11 discloses a flexible printed circuit board 400 formed by a partial copper plating method, and the embodiment of FIG. 12 may disclose a flexible printed circuit board 400 to which a partial copper plating method is not applied.

In the embodiment of FIG. 12, compared to the embodiment of FIG. 11, the overall thickness of the conductive layer in the first layer L1 and the fourth layer L4 may increase due to the addition of metal layers 412, 442 in the first layer L1 and the fourth layer L4 in the flexible portion 403. Accordingly, strain may increase in the folding operation of the foldable electronic device.

Even when using a partial copper plating method to reduce strain in the flexible portion 403 where the folding operation is performed as in the embodiment of FIG. 11, only the thickness of the conductive layer in the first layer L1 and the fourth layer L4 present in the outermost layer of the flexible printed circuit board 400 may be partially controlled, and since the thickness of the conductive layer is maintained constant in the second layer L2 and the third layer L3, it may be difficult to achieve the purpose of increasing the repetitive driving life of the flexible printed circuit board 400 or, additionally or alternatively, lowering DC resistance.

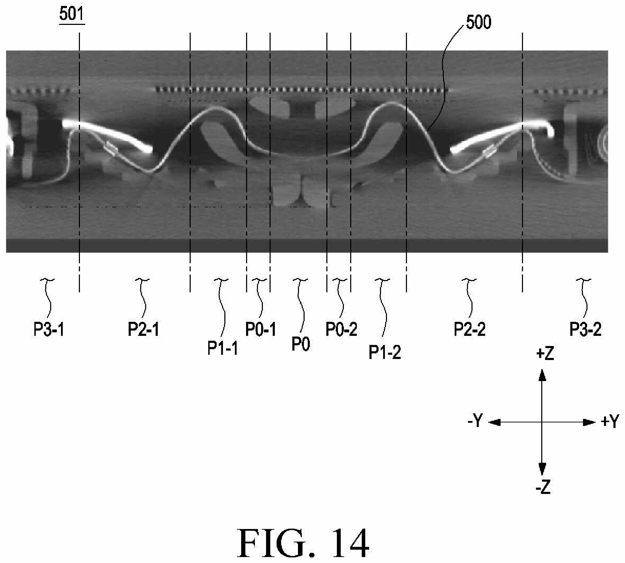

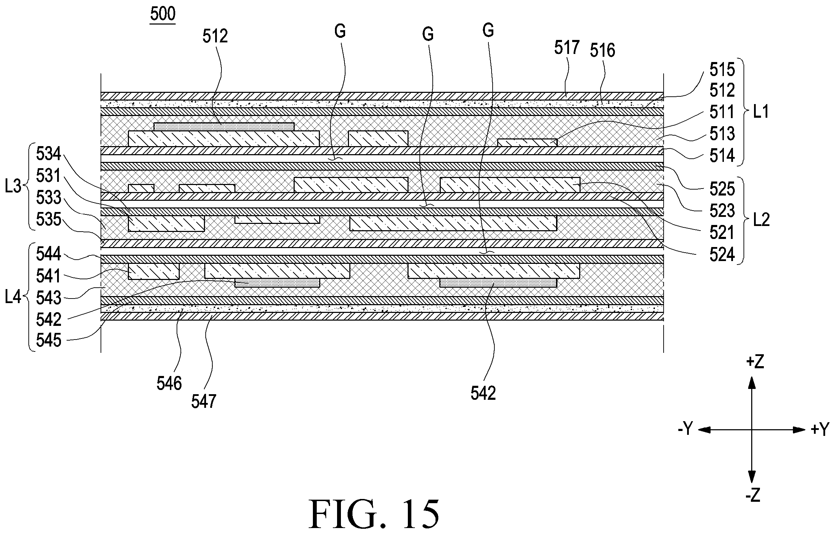

FIG. 13 is a cross-sectional view illustrating a flexible printed circuit board according to an embodiment of the disclosure. FIG. 14 illustrates an X-ray capture of a flexible printed circuit board according to an embodiment of the disclosure. FIG. 15 is a cross-sectional view illustrating a flexible printed circuit board according to an embodiment.

Detailed configurations of the foldable electronic device 501 and the flexible printed circuit board 500 according to an embodiment of the disclosure that are not described below may be the same as the detailed configurations of the electronic device (e.g., the electronic device 101, the foldable electronic device 301) and the flexible printed circuit board 340, 400 according to an embodiment of the disclosure described with reference to FIGS. 1 to 12. Descriptions of the same detailed components are omitted within the overlapping scope.

Referring to FIG. 13, a flexible printed circuit board 500 according to an embodiment may include a layered structure (or stacked structure) of a plurality of layers L1, L2, L3, L4. For example, in FIG. 13, one side and the other side of the flexible printed circuit board 500 may include rigid portions for being fixed to a housing (e.g., the first housing structure 311 and the second housing structure 312 of FIGS. 2 to 3) along a length direction (e.g., Y-axis direction). Further, a flexible portion may be included between the rigid portions. According to an embodiment, the flexible portion may be a portion corresponding to a folding area of the foldable electronic device (e.g., a folding area of the display (e.g., 231c of FIG. 2)). According to an embodiment, the flexible portion may also be referred to as "a folding area of the flexible printed circuit board 500" corresponding to a folding area of the foldable electronic device (e.g., the folding area of the display (e.g., the folding area 231c of FIG. 2)).

According to various embodiments, the first rigid portion and the second rigid portion may form the same layer and the same structure. However, without limitations thereto, various arrangements and various layered structures may be formed. Further, in the drawings, the first rigid portion and the second rigid portion are illustrated as having symmetric shapes, but this is not necessarily limited thereto. Hereinafter, the first rigid portion and the flexible portion are described, and description of the second rigid portion may be omitted. The description of the first rigid portion may be applied to the second rigid portion. In the embodiment of FIG. 13, the first rigid portion may correspond to the P3-1 area, and the second rigid portion may correspond to the P3-2 area. Further, the flexible portion may correspond to the P2-1 area, the P1-1 area, the PO-1 area, the P0 area, the P0-2 area, the P1-2 area, and the P2-2 area. In the disclosure, for convenience of description, the first rigid portion, the second rigid portion, and the flexible portion are described with reference to the embodiment of FIG. 13, but it should be noted that the number and/or range of areas corresponding to the first rigid portion, the second rigid portion, and the flexible portion are not necessarily limited thereto.

FIG. 13 illustrates a layered structure (or stacked structure) of a flexible printed circuit board 500 including a plurality of conductive layers and insulation layers. The first layer L1, the second layer L2, the third layer L3, and the fourth layer L4 included in the flexible printed circuit board 500 illustrated in FIG. 13 may all be used as layers for transmitting signals between the first housing structure and the second housing structure. Further, the first layer L1, the second layer L2, the third layer L3, and the fourth layer L4 may include conductive layers forming signal lines. Referring to FIG. 13, according to an embodiment, the flexible printed circuit board 500 may include a first layer L1 including a 1-1th substrate layer 514, a first conductive layer 511, a first insulation layer 513, and a 1-2th substrate layer 515, a second layer L2 including a 2-1th substrate layer 524, a second conductive layer 521, a second insulation layer 523, and a 2-2th substrate layer 525, a third layer L3 including a 3-1th substrate layer 534, a third conductive layer 531, a third insulation layer 533, and a 3-2th substrate layer 535, and a fourth layer L4 including a 4-1th substrate layer 544, a fourth conductive layer 541, a fourth insulation layer 543, and a 4-2th substrate layer 545. According to an embodiment, the first layer L1, the second layer L2, the third layer L3, and the fourth layer L4 may be bonded in the first rigid portion and the second rigid portion. In the flexible portion, the first layer L1, the second layer L2, the third layer L3, and the fourth layer L4 may be designed to have air gaps G between adjacent layers. By having air gaps G between layers in the flexible portion, bending in the folding area of the flexible printed circuit board 500 may be performed smoothly.

The embodiment of FIG. 13 discloses a flexible printed circuit board 500 including four layers, but embodiments of the disclosure are not limited thereto. The flexible printed circuit board 500 may include fewer layers or more layers than illustrated in the drawing according to embodiments.

The first layer L1, the second layer L2, the third layer L3, and the fourth layer L4 are layers for transmission of signals and/or power, and may each include a plurality of conductive lines. In the embodiment of FIG. 13, the first layer L1, the second layer L2, the third layer L3, and the fourth layer L4 adopt a stripline type signal transmission method according to an embodiment, illustrating that two substrate layers are included around (above and below) the conductive layer. However, this is not limited thereto, and for example, when adopting a signal transmission method according to a microstrip type signal transmission method, one of the two substrate layers around the conductive layer may be omitted. For example, the substrate layer may include polyimide and/or flexible copper clad laminate (FCCL), but the disclosure is not limited thereto. For example, the conductive layer includes copper but is not necessarily limited thereto. For example, the insulation layer may include a coverlay and/or adhesive material, but the disclosure is not limited thereto.

The first layer L1 and the fourth layer L4 may be layers in the outermost layer of the flexible printed circuit board 500. According to an embodiment, shielding layers such as a metal paste 516 or a black layer 517 may be further provided on the outside of the first layer L1, and shielding layers such as a metal paste 546 or a black layer 547 may also be further provided on the outside of the fourth layer L4. Placing the thickest, most conductive layers on the outside of the multi-layer stack may provide the technical effect of improved electromagnetic shielding for the more sensitive signal lines on the inner layers. These outer layers may act as effective ground or power planes, containing electromagnetic interference (EMI) and preventing crosstalk between signals on different layers. This may improve the signal integrity of the entire FPCB, especially for high-frequency signals, and places the stiffest layers furthest from the neutral bending axis to further stabilize the rigid portions of the device.

According to an embodiment, the first layer L1, the second layer L2, the third layer L3, and the fourth layer L4 may be electrically connected to each other through vias. Metal layers 512, 542 may be additionally provided in the first layer L1 and the fourth layer L4. The metal layers 512, 542 may be implemented through a copper plating process using the first layer L1 and the fourth layer L4. This dual-purpose use of the copper plating process may be highly advantageous as it eliminates the need for a separate metal deposition step to thicken the signal lines. This may result in a more streamlined and cost-effective manufacturing process, reduces potential points of failure, and contributes to a thinner overall FPCB stack-up in the rigid areas, which is critical for the slim design of modern foldable devices. According to the disclosure, the metal layers 512, 542 may be provided not only in the first rigid portion and the second rigid portion, but also in the flexible portion. The flexible printed circuit board 500 of the disclosure may lower DC resistance by further including the metal layers 512, 542 in the flexible portion. Further, according to the disclosure, the repetitive driving life of the flexible printed circuit board 500 may be increased by forming the conductive layer thin in a portion of an area corresponding to the flexible portion of layers for signal transmission.

According to the disclosure, when the flexible printed circuit board 500 includes a first area, a second area, and a third area divided according to a degree of bending in the folding area in an area corresponding to the folding area of the foldable electronic device 501, the flexible printed circuit board 500 of the disclosure may have metal materials with different thicknesses in the first area, the second area, and the third area on the same layer.

For example, referring to FIGS. 13 and 14 together with FIGS. 7 to 9, in the flexible printed circuit board 500, areas P1-1, P1-2 corresponding to the first inner bent portion 342-1 and the second inner bent portion 342-2 having the greatest bending within the flexible portion may be designated as a first area. Further, in the flexible printed circuit board 500, areas P0, P3-1, P3-2 corresponding to the central portion 344 having the smallest bending in the flexible portion and the first rigid portion and the second rigid portion may be designated as a third area. Further, in the flexible printed circuit board 500, areas P2-1, PO-1, P0-2, P2-2 having smaller bending than the first area and larger bending than the third area in the flexible portion may be designated as a second area.

According to an embodiment of the disclosure, as referenced in FIGS. 13 and 14, the flexible printed circuit board 500 may include a first area, a second area, and a third area having different thicknesses, where the first area may include P1-1 and P1-2, the second area may include P2-1, PO-1, P0-2, and P2-2, and the third area may include P0, P3-1, and P3-2. Such division of areas may be an example when the flexible printed circuit board 500 is disposed symmetrically about a folding axis (or folding plane) of a foldable electronic device (e.g., the foldable electronic device 301 of FIGS. 5 to 7). In the following description, for convenience, the embodiment illustrated in FIGS. 13 and 14 and below is mainly described, but it should be noted that the division of areas is not necessarily limited thereto.

For example, in some embodiments, the flexible printed circuit board 500 may include only two areas having different thicknesses, or may include areas divided into four or more. In some embodiments, the flexible printed circuit board 500 may include only one of the P1-1 and P1-2 areas as the first area. Further, in some embodiments, the flexible printed circuit board 500 may include only at least one of the P2-1, PO-1, P0-2, and P2-2 areas as the second area. Further, in some embodiments, the flexible printed circuit board 500 may include only at least one of the P0, P3-1, and P3-2 areas as the third area. Further, according to some embodiments, the area division illustrated in FIGS. 13 and 14 may belong to other areas rather than the above-mentioned areas. For example, PO-1 and P0-2 may be included in the first area rather than the second area. Further, application of embodiments where the P3-1 and P3-2 areas are included in the second area or, in some cases, the first area, is also possible. Further, e.g., P4-1, P4-2 of FIGS. 8 and 9 that are not mentioned may be included in the third area. Various other embodiments may be applied.

According to an embodiment, the thickness of the conductive layer for implementing conductive lines in the second area may be formed thicker than in the first area. Here, the thickness of the first area of each layer may be implemented to be thinner than the thickness of the second area by an etching process.

According to an embodiment, compared to the thickness of the conductive layer for implementing conductive lines in the second area, the sum of the thickness of the conductive layer for implementing conductive lines in the third area and the thickness of the additional metal layer according to the copper plating process may be larger. In this case, it should be noted that the thickness of each layer combining the conductive layer, insulation layer, and substrate layer is formed constantly.

According to an embodiment, the sum of the thickness of the conductive layer for implementing conductive lines in the third area and the thickness of the additional metal layer according to the copper plating process being larger than the thickness of the conductive layer for implementing conductive lines in the second area may be applied only in the outermost layers (e.g., the first layer L1, the fourth layer L4) of the flexible printed circuit board 500 where copper plating is performed.

FIG. 15 is a cross-sectional view illustrating a flexible printed circuit board 500 viewed from a different direction than the embodiment illustrated in FIG. 13. Referring to FIG. 15, in the flexible printed circuit board 500, conductive lines of different functions may be disposed according to a width direction (X-axis direction) of the foldable electronic device. Further, the additional metal layers 512, 542 may be selectively provided according to functions required for each conductive line.

In the embodiment of FIG. 13, components (e.g., metal layers) of each layer are illustrated as being left/right symmetric around the P0 area where the central portion is formed in the flexible printed circuit board 500, but referring to FIG. 15, when the direction of viewing the flexible printed circuit board 500 is changed, the arrangement positions of the metal layers may be asymmetric.

Further, referring to FIG. 15, the thicknesses of the conductive layers included in the flexible printed circuit board 500 may be different for each layer, or may be formed differently even within one layer.

Further, referring to FIG. 15, the conductive layers included in the flexible printed circuit board 500 may have a discrete form along the length direction (e.g., Y-axis direction) of the electronic device in each layer.

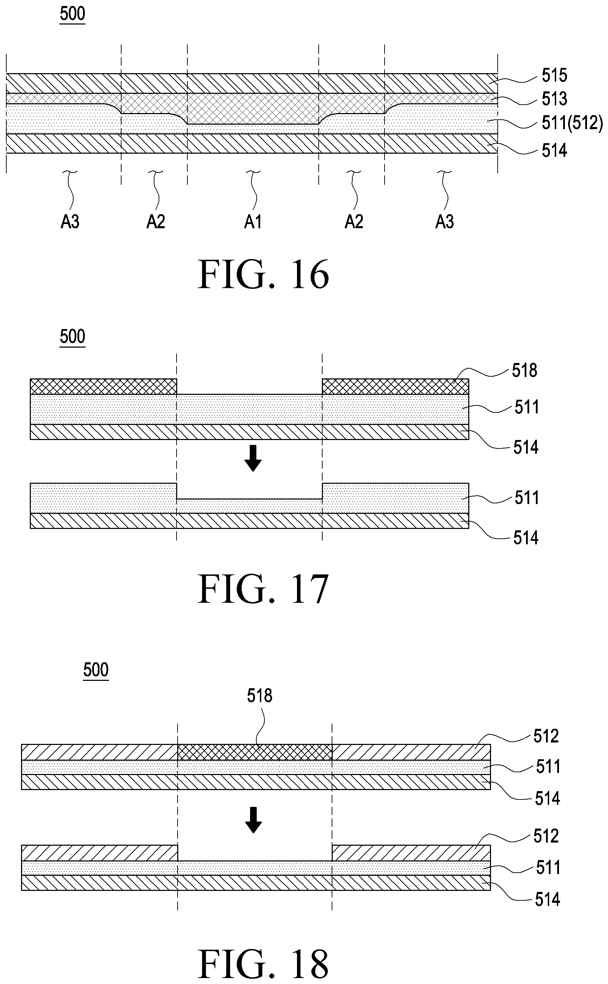

Hereinafter, through the embodiments of FIGS. 16 to 20, a manufacturing method of a flexible printed circuit board 500 according to an embodiment of the disclosure is discussed.

FIG. 16 is a cross-sectional view illustrating a flexible printed circuit board according to an embodiment of the disclosure.

FIG. 16 may show a cross-sectional view illustrating one layer included in the flexible printed circuit board 500.

The layer 500 included in the flexible printed circuit board 500 may include a 1-1th substrate layer 514, a first conductive layer 511, a first insulation layer 513, and a 1-2th substrate layer 515. Here, the first conductive layer 511 may be illustrated to be formed of substantially the same material as the additional metal layer 512. In the first area A1, the first conductive layer 511 has the thinnest metal material thickness, and in the third area A3, the first conductive layer 511 may have the thickest metal material thickness. The thickness of the metal material of the first conductive layer 511 in the second area A2 may have a thickness between the thickness in the first area A1 and the thickness in the third area A3. In this case, the insulation layer 513 may be formed thickest in the first area A1 where the metal material thickness is thinnest, and thinnest in the third area A3 where the metal material thickness is thickest.

To form metal materials having different thicknesses as in the embodiment illustrated in FIG. 16, the disclosure may use a subtractive method and an additive method.

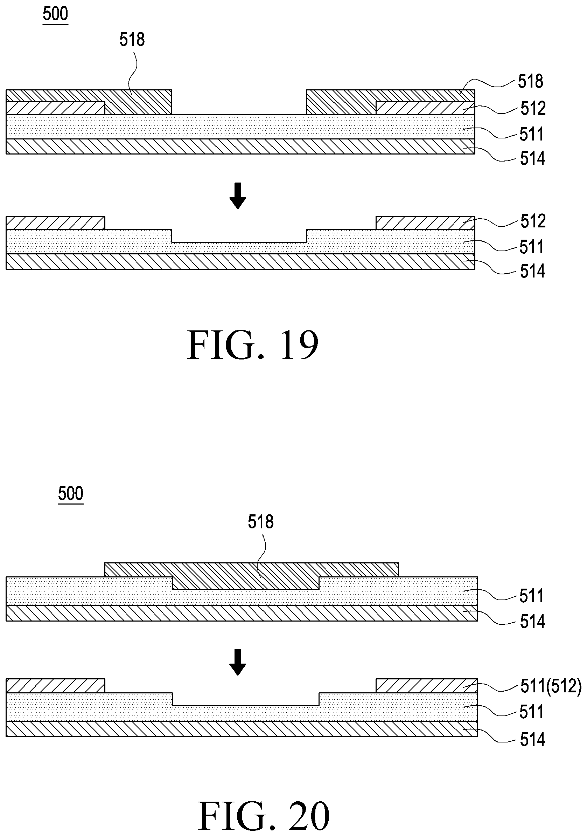

FIG. 17 is a view illustrating a manufacturing method according to an embodiment of the disclosure. FIG. 18 is a view illustrating a manufacturing method according to an embodiment of the disclosure. FIG. 19 is a view illustrating a manufacturing method according to an embodiment of the disclosure. FIG. 20 is a view illustrating a manufacturing method according to an embodiment of the disclosure.

FIG. 17 illustrates a subtractive method, FIG. 18 illustrates an additive method, FIG. 19 illustrates an embodiment manufactured using a subtractive method after an additive method, and FIG. 20 may show an embodiment manufactured using an additive method after a subtractive method.

Referring to FIG. 17, according to the subtractive method, after forming the first conductive layer 511 on the 1-1th substrate layer 514, a dry film 518 may be developed in an outer area (e.g., a second area) that is not a target area (e.g., a first area). Further, selective etching may be performed to form different thicknesses of the conductive layer in different areas of the flexible printed circuit board 500. With the first conductive layer 511 and the dry film 518 developed on the 1-1th substrate layer 514, a target area of the conductive layer may be etched to a desired depth through exposure work for a predetermined time. After going through a process of peeling off the dry film 518, a flexible printed circuit board 500 having different conductive layer thicknesses in two different areas may be obtained.

Referring to FIG. 18, according to the additive method, after forming the first conductive layer 511 on the 1-1th substrate layer 514, a dry film 518 may be developed in a target area (e.g., a first area) and a copper plating process may be performed in an outer area (e.g., a second area) of the target area to form different thicknesses of the conductive layer in different areas of the flexible printed circuit board 500. The first conductive layer 511 may be formed on the 1-1th substrate layer 514 and a second conductive layer 512 may be formed thereon. With the 1-1th substrate layer 514, the first conductive layer 511, and the second conductive layer 512 formed and the dry film 518 developed between the second conductive layers 512, the thickness of the conductive layer may be increased to a desired height through a copper plating process. After going through a process of peeling off the dry film 518, a flexible printed circuit board 500 having different conductive layer thicknesses in two different areas may be obtained.

Referring to FIG. 19, according to an embodiment manufactured using a subtractive method after an additive method, after forming the first conductive layer 511 on the 1-1th substrate layer 514, a copper plating process is performed to form an additional metal layer 512. Further, a dry film 518 may be developed in outer areas (e.g., a second area and a third area) that are not a target area (e.g., a first area) to cover the additional metal layer, and a target area of the conductive layer may be etched to a desired depth through exposure work for a predetermined time. After going through a process of peeling off the dry film 518, a flexible printed circuit board 500 having different conductive layer thicknesses in three different areas may be obtained.

Referring to FIG. 20, according to an embodiment manufactured using an additive method after a subtractive method, a process according to the embodiment of FIG. 17 is performed to obtain a flexible printed circuit board 500 having different conductive layer thicknesses in two different areas. Further, a dry film 518 may be developed to cover a target area (e.g., a first area) and a portion of an outer area (e.g., a second area) of the target area, and a target area of the conductive layer may be etched to a desired depth through exposure work for a predetermined time. Before developing the dry film 518, an additional metal layer 512 is formed in a farther outer area (e.g., a third area) than the target area (e.g., a first area) and a portion of the outer area (e.g., a second area) of the target area. After going through a process of peeling off the dry film 518, a flexible printed circuit board 500 having different conductive layer thicknesses in three different areas may be obtained.

According to an embodiment of the disclosure, there is provided a foldable electronic device 101; 301 including a flexible printed circuit board (FPCB). The foldable electronic device comprises a first housing 210; 311 including a first component; a second housing 220; 312 including a second component, a hinge assembly 270; 330 rotatably connecting the first housing and the second housing, a flexible display 160; 230 disposed from the first housing across an area where the hinge assembly is disposed to the second housing, and a flexible printed circuit board FPCB 280; 340; 500 electrically connecting the first component and the second component and including a plurality of layers. A signal line for transmitting a signal and/or power included in the plurality of layers of the flexible printed circuit board includes a metal material. A folding area of the flexible printed circuit board corresponding to a folding area of the foldable electronic device includes a first area, a second area, and a third area classified according to a degree of bending. At least one layer among the plurality of layers is formed so that the metal material has different thicknesses in the first area, the second area, and the third area on a same layer. While an embodiment with a first, second, and third area provides a beneficial graduated stiffness, it is also contemplated that the invention can be practiced with at least two areas having different metal thicknesses. For example, an embodiment may include only a first, thinnest area corresponding to the primary bending zone and a third, thickest area for the rigid portions, without a distinct intermediate second area. Forming the metal material with different thicknesses in these defined areas on the same layer may achieve several synergistic technical effects. It may decouple the mechanical and electrical requirements, allowing the thinnest first area to maximize flexibility and the thickest third area to minimize electrical resistance. This may create an engineered, non-uniform stiffness profile along the FPCB, which guides the bending motion and concentrates flexure in the areas designed to handle it. This controlled bending may significantly increase the overall reliability and Mean Time Between Failures (MTBF) of the foldable device over its intended lifecycle.

According to an embodiment, the first area may correspond to a flexible portion where the signal line is bent in the flexible printed circuit board, and the metal material of the first area is formed to be the thinnest among the thickness of the metal materials in the first area, the second area, and the third area. The technical effect of this specific relationship may be the optimal decoupling of mechanical and electrical properties. By forming the metal in the highflexure first area to be the thinnest, the bending stress and mechanical strain are minimized, maximizing the fatigue life of the conductor. Concurrently, by forming the metal in the rigid, low-flexure third area to be the thickest, the electrical resistance may be minimized, ensuring high power integrity and signal fidelity. This purpose-built design directly may solve the inherent trade-off between mechanical durability and electrical performance in a single, integrated solution. The third area may correspond to a rigid portion where the signal line is disposed flat in the flexible printed circuit board, and the metal material of the third area is formed to be the thickest among the thickness of the metal materials in the first area, the second area, and the third area. In an exemplary, non-limiting embodiment, the thickness of the metal material in the first area may be in the range of 5 to 15 micrometers. The thickness in the third area may be in the range of 25 to 75 micrometers. The ratio of the thickness of the metal in the third area to the first area may be at least 2:1, and may be in the range of 3:1 to 5:1, to achieve a significant improvement in conductivity without compromising the overall flexibility of the FPCB.

According to an embodiment, the signal line may include copper (Cu), and be formed so that a thickness of copper is thinnest in the first area and thickest in the third area. The thickness of copper in the third area may be a sum of a thickness of copper included in a conductive line and a thickness of copper added in a copper plating process for via formation.

According to an embodiment, the third area may be formed in two layers formed at an outermost portion of the flexible printed circuit board among the plurality of layers.

According to an embodiment, a layer disposed inside the two layers formed at the outermost portion of the flexible printed circuit board among the plurality of layers may be formed so that the metal material included in the signal line has different thicknesses in two different areas.

According to an embodiment, the foldable electronic device may further comprise a hinge cover 260; 332 covering the hinge assembly. The flexible printed circuit board may include a first inner bent portion 342-1 and a second inner bent portion 342-2 bent corresponding to cover ends 3321, 3322 of the hinge cover, and include a central portion 344 disposed between the first inner bent portion and the second inner bent portion. The metal material included in the signal line in the first inner bent portion and the second inner bent portion may be formed thin. The metal material included in the signal line in the central portion may be formed relatively thicker than the metal material included in the signal line in the first inner bent portion and the second inner bent portion.

According to an embodiment, a thickness of the metal material included in the signal line in an area between the first inner bent portion and the central portion may be formed thicker than a thickness of the metal material included in the signal line in the first inner bent portion and thinner than a thickness of the metal material included in the signal line in the central portion. A thickness of the metal material included in the signal line in an area between the second inner bent portion and the central portion may be formed thicker than a thickness of the metal material included in the signal line in the second inner bent portion and thinner than a thickness of the metal material included in the signal line in the central portion.

According to an embodiment, the flexible printed circuit board may include a first fixing portion 341-1 and a second fixing portion 341-2 seated on supporting members 321, 322 of the foldable electronic device. The flexible printed circuit board may include a first outer bent portion 343-1 extending from the first fixing portion in a direction opposite to a folding axis of the foldable electronic device and a second outer bent portion 343-2 extending from the second fixing portion in the direction opposite to the folding axis. A thickness of the metal material included in the signal line in the first outer bent portion and the second outer bent portion may be formed thicker than a thickness of the metal material included in the signal line in the first inner bent portion and the second inner bent portion.

According to an embodiment, an air gap may be formed between adjacent layers among the plurality of layers of the flexible printed circuit board.

According to an embodiment, at least two layers including a substrate layer, a conductive layer, and an insulation layer among the plurality of layers of the flexible printed circuit board may be formed to have substantially the same thickness for each layer.

According to an embodiment, the flexible printed circuit board may be manufactured according to one of an additive method, a subtractive method, a subtractive method after an additive method, or an additive method after a subtractive method.

According to an embodiment, the first area may be an area formed to have a thinnest thickness compared to the second area or the third area and be formed by an additive method or a subtractive method. The third area may be formed by a copper plating method.

According to an embodiment of the disclosure, there may be provided a foldable electronic device 101; 301 including a flexible printed circuit board (FPCB). The foldable electronic device may comprise a first housing 210; 311 including a first component, a second housing 220; 312 including a second component, a hinge assembly 270; 330 rotatably connecting the first housing and the second housing, a flexible display 160; 230 disposed from the first housing across a folding area where the hinge assembly is disposed to the second housing, and a flexible printed circuit board FPCB 280; 340; 500 electrically connecting the first component and the second component, including a plurality of layers, and including a flexible portion corresponding to the folding area and rigid portions at one end and another end of the flexible portion. A signal line for transmitting a signal and/or power included in the plurality of layers of the flexible printed circuit board may include a metal material, and include a first area, a second area, and a third area classified according to a degree of bending in the folding area of the flexible printed circuit board. The first area may correspond to a flexible portion where the signal line is bent in the flexible printed circuit board, and the metal material of the first area may be formed to be the thinnest among the thickness of the metal material of the first area, the second area, and the third area. The third area may correspond to a rigid portion where the signal line is disposed flat in the flexible printed circuit board, and the metal material of the third area may be formed to be the thickest among the thickness of the metal material of the first area, the second area, and the third area. The metal material of the second area may be formed thicker than a thickness of the metal material of the first area and thinner than a thickness of the metal material of the third area.

According to an embodiment, the signal line may include copper (Cu), and be formed so that a thickness of copper is thinnest in the first area and thickest in the third area. The thickness of copper in the third area may be a sum of a thickness of copper included in a conductive line and a thickness of copper added in a copper plating process for via formation.

According to an embodiment, the third area may be formed to have a thicker thickness compared to the first area and the second area in a layer formed at an outermost portion of the flexible printed circuit board among the plurality of layers.

According to an embodiment, a layer disposed inside the two layers formed at the outermost portion of the flexible printed circuit board among the plurality of layers may be formed so that the metal material included in the signal line has different thicknesses in two different areas.

According to an embodiment, the foldable electronic device may further comprise a hinge cover 260; 332 covering the hinge assembly. The flexible printed circuit board may include a first inner bent portion 342-1 and a second inner bent portion 342-2 bent corresponding to cover ends 3321, 3322 of the hinge cover, and include a central portion 344 disposed between the first inner bent portion and the second inner bent portion. The metal material included in the signal line in the first inner bent portion and the second inner bent portion may be formed thin. The metal material included in the signal line in the central portion may be formed relatively thicker than the metal material included in the signal line in the first inner bent portion and the second inner bent portion.

According to an embodiment, the first area may be an area formed to have a thinnest thickness compared to the second area or the third area and be formed by an additive method or a subtractive method. The third area may be formed by a copper plating method.

According to an embodiment of the disclosure, there may be provided a foldable electronic device 101; 301 including a flexible printed circuit board (FPCB). The foldable electronic device may comprise a first housing 210; 311 including a first component, a second housing 220; 312 including a second component, a hinge assembly 270; 330 rotatably connecting the first housing and the second housing, a flexible display 160; 230 disposed from the first housing across a folding area where the hinge assembly is disposed to the second housing, and a flexible printed circuit board FPCB 280; 340; 500 electrically connecting the first component and the second component, including a plurality of layers, and including a flexible portion corresponding to the folding area and rigid portions at one end and another end of the flexible portion. A signal line for transmitting a signal and/or power included in the plurality of layers of the flexible printed circuit board may include a metal material, and include a first area, a second area, and a third area classified according to a degree of bending in the folding area of the flexible printed circuit board.

The third area may be formed to have a thicker thickness compared to the first area and the second area in a layer formed at an outermost portion of the flexible printed circuit board among the plurality of layers. A layer disposed inside the two layers formed at the outermost portion of the flexible printed circuit board among the plurality of layers may be formed so that the metal material included in the signal line has different thicknesses in the first area and the second area.

According to an embodiment, the first area may be an area formed to have a thinnest thickness compared to the second area or the third area and be formed by an additive method or a subtractive method. The third area may be formed by a copper plating method.

While the disclosure has been described and shown in connection with an embodiment thereof, it should be appreciated that an embodiment is intended as limiting the disclosure but as illustrative. It will be apparent to one of ordinary skill in the art that various changes may be made in form and detail without departing from the overall scope of the disclosure, including the appended claims and their equivalents.

The following additional aspects of the present disclosure are also defined:
Aspect 1. A foldable electronic device including a flexible printed circuit board (FPCB), the foldable electronic device comprising: a first housing including a first component; a second housing including a second component; a hinge assembly rotatably connecting the first housing and the second housing; a flexible display disposed from the first housing across a folding area where the hinge assembly is disposed to the second housing; and a flexible printed circuit board (FPCB) electrically connecting the first component and the second component, including a plurality of layers, and including a flexible portion corresponding to the folding area and rigid portions at one end and another end of the flexible portion, wherein a signal line for transmitting a signal and/or power included in the plurality of layers of the flexible printed circuit board includes a metal material, and includes a first area, a second area, and a third area classified according to a degree of bending in the folding area of the flexible printed circuit board, wherein the first area corresponds to a flexible portion where the signal line is bent in the flexible printed circuit board, and the metal material of the first area is formed to be the thinnest among the thickness of the metal material of the first area, the second area, and the third area, wherein the third area corresponds to a rigid portion where the signal line is disposed flat in the flexible printed circuit board, and the metal material of the third area is formed to be the thickest among the thickness of the metal material of the first area, the second area, and the third area, and wherein the metal material of the second area is formed thicker than a thickness of the metal material of the first area and thinner than a thickness of the metal material of the third area.
Aspect 2. The foldable electronic device of Aspect 1, wherein the signal line includes copper (Cu), and is formed so that a thickness of copper is thinnest in the first area and thickest in the third area, and wherein the thickness of copper in the third area is a sum of a thickness of copper included in a conductive line and a thickness of copper added in a copper plating process for via formation.
Aspect 3. The foldable electronic device of Aspect 2, wherein the third area is formed to have a thicker thickness compared to the first area and the second area in a layer formed at an outermost portion of the flexible printed circuit board among the plurality of layers.
Aspect 4. The foldable electronic device of Aspect 3, wherein a layer disposed inside the two layers formed at the outermost portion of the flexible printed circuit board among the plurality of layers is formed so that the metal material included in the signal line has different thicknesses in two different areas.
Aspect 5. The foldable electronic device of any one of Aspects 1 to 4, further comprising a hinge cover covering the hinge assembly, wherein the flexible printed circuit board includes a first inner bent portion and a second inner bent portion bent corresponding to cover ends of the hinge cover, and includes a central portion disposed between the first inner bent portion and the second inner bent portion, wherein the metal material included in the signal line in the first inner bent portion and the second inner bent portion is formed thin, and wherein the metal material included in the signal line in the central portion is formed relatively thicker than the metal material included in the signal line in the first inner bent portion and the second inner bent portion.
Aspect 6. The foldable electronic device of any one of Aspects 1 to 5, wherein the first area is an area formed to have a thinnest thickness compared to the second area or the third area and is formed by an additive method or a subtractive method, and wherein the third area is formed by a copper plating method.
Aspect 7. A foldable electronic device including a flexible printed circuit board (FPCB), the foldable electronic device comprising: a first housing including a first component; a second housing including a second component; a hinge assembly rotatably connecting the first housing and the second housing; a flexible display disposed from the first housing across a folding area where the hinge assembly is disposed to the second housing; and a flexible printed circuit board (FPCB) electrically connecting the first component and the second component, including a plurality of layers, and including a flexible portion corresponding to the folding area and rigid portions at one end and another end of the flexible portion, wherein a signal line for transmitting a signal and/or power included in the plurality of layers of the flexible printed circuit board includes a metal material, and includes a first area, a second area, and a third area classified according to a degree of bending in the folding area of the flexible printed circuit board, wherein the third area is formed to have a thicker thickness compared to the first area and the second area in a layer formed at an outermost portion of the flexible printed circuit board among the plurality of layers, and wherein a layer disposed inside the two layers formed at the outermost portion of the flexible printed circuit board among the plurality of layers are formed so that the metal material included in the signal line has different thicknesses in the first area and the second area.
Aspect 8. The foldable electronic device of Aspect 7, wherein the first area is an area formed to have a thinnest thickness compared to the second area or the third area and is formed by an additive method or a subtractive method, and wherein the third area is formed by a copper plating method.

## Claims

1. A foldable electronic device (101; 301) including a flexible printed circuit board, FPCB, the foldable electronic device comprising:
a first housing (210; 311) including a first component;
a second housing (220; 312) including a second component;
a hinge assembly (270; 330) rotatably connecting the first housing and the second housing;
a flexible display (160; 230) disposed from the first housing across an area where the hinge assembly is disposed to the second housing; and
a flexible printed circuit board, FPCB, (280; 340; 500) electrically connecting the first component and the second component and including a plurality of layers,
wherein a signal line for transmitting a signal and/or power included in the plurality of layers of the flexible printed circuit board includes a metal material,
wherein a folding area of the flexible printed circuit board corresponding to a folding area of the foldable electronic device includes a first area, a second area, and a third area classified according to a degree of bending, and
wherein at least one layer among the plurality of layers is formed so that the metal material has different thicknesses in the first area, the second area, and the third area on a same layer.

2. The foldable electronic device of claim 1, wherein the first area corresponds to a flexible portion where the signal line is bent in the flexible printed circuit board, and the metal material of the first area is formed to be the thinnest among the thickness of the metal materials in the first area, the second area, and the third area, and
wherein the third area corresponds to a rigid portion where the signal line is disposed flat in the flexible printed circuit board, and the metal material of the third area is formed to be the thickest among the thickness of the metal materials in the first area, the second area, and the third area.

3. The foldable electronic device of claim 2, wherein the signal line includes copper, Cu, and is formed so that a thickness of copper is thinnest in the first area and thickest in the third area, and
wherein the thickness of copper in the third area is a sum of a thickness of copper included in a conductive line and a thickness of copper added in a copper plating process for via formation.

4. The foldable electronic device of claim 2 or 3, wherein the third area is formed in two layers formed at an outermost portion of the flexible printed circuit board among the plurality of layers.

5. The foldable electronic device of claim 2 or 3, wherein a layer disposed inside two layers formed at an outermost portion of the flexible printed circuit board among the plurality of layers are formed so that the metal material included in the signal line has different thicknesses in two different areas.

6. The foldable electronic device of any one of claims 1 to 5, further comprising a hinge cover (260; 332) covering the hinge assembly,
wherein the flexible printed circuit board includes a first inner bent portion (342-1) and a second inner bent portion (342-2) bent corresponding to cover ends (3321, 3322) of the hinge cover, and includes a central portion (344) disposed between the first inner bent portion and the second inner bent portion,
wherein the metal material included in the signal line in the first inner bent portion and the second inner bent portion is formed thin, and
wherein the metal material included in the signal line in the central portion is formed relatively thicker than the metal material included in the signal line in the first inner bent portion and the second inner bent portion.

7. The foldable electronic device of claim 6, wherein a thickness of the metal material included in the signal line in an area between the first inner bent portion and the central portion is formed thicker than a thickness of the metal material included in the signal line in the first inner bent portion and thinner than a thickness of the metal material included in the signal line in the central portion, and
wherein a thickness of the metal material included in the signal line in an area between the second inner bent portion and the central portion is formed thicker than a thickness of the metal material included in the signal line in the second inner bent portion and thinner than a thickness of the metal material included in the signal line in the central portion.

8. The foldable electronic device of claim 6 or 7, wherein the flexible printed circuit board includes a first fixing portion (341-1) and a second fixing portion (341-2) seated on supporting members (321, 322) of the foldable electronic device, and includes a first outer bent portion (343-1) extending from the first fixing portion in a direction opposite to a folding axis of the foldable electronic device and a second outer bent portion (343-2) extending from the second fixing portion in the direction opposite to the folding axis, and
wherein a thickness of the metal material included in the signal line in the first outer bent portion and the second outer bent portion are formed thicker than a thickness of the metal material included in the signal line in the first inner bent portion and the second inner bent portion.

9. The foldable electronic device of any one of claims 1 to 8, wherein an air gap is formed between adjacent layers among the plurality of layers of the flexible printed circuit board.

10. The foldable electronic device of any one of claims 1 to 9, wherein at least two layers including a substrate layer, a conductive layer, and an insulation layer among the plurality of layers of the flexible printed circuit board are formed to have substantially the same thickness for each layer.

11. The foldable electronic device of any one of claims 1 to 10, wherein the flexible printed circuit board is manufactured according to one of an additive method, a subtractive method, a subtractive method after an additive method, or an additive method after a subtractive method.

12. The foldable electronic device of any one of claims 1 to 11, wherein the first area is an area formed to have a thinnest thickness compared to the second area or the third area and is formed by an additive method or a subtractive method, and
wherein the third area is formed by a copper plating method.

13. A method of manufacturing a flexible printed circuit board (280; 340; 500), FPCB, for electrically connecting a first component and a second component within a foldable electronic device (101; 301), the method comprising the steps of:
providing a plurality of layers for the FPCB (280; 340; 500), wherein at least one layer of the plurality of layers includes a signal line for transmitting a signal and/or power including a metal material;
processing the FPCB (280; 340; 500) to define, within a folding area corresponding to a folding area of the foldable electronic device (101; 301), a first area, a second area, and a third area classified according to a degree of bending; and
processing the metal material within the at least one layer to have different thicknesses in the first area, the second area, and the third area on a same layer.

14. The method of claim 13, wherein the step of processing the metal material further comprises:
forming the metal material in the first area to be the thinnest among the thicknesses in the first, second, and third areas, the first area corresponding to a flexible portion where the signal line is bent; and
forming the metal material in the third area to be the thickest among the thicknesses in the first, second, and third areas, the third area corresponding to a rigid portion where the signal line is disposed flat.

15. The method of claim 14, wherein the metal material comprises copper, Cu, and wherein the step of forming the metal material in the third area to be the thickest further comprises:
performing a copper plating process for via formation, such that the thickness of the copper in the third area is a sum of a thickness of a conductive line and a thickness of copper added by the copper plating process.
